# EUROPÄISCHE PATENTANMELDUNG

(11) **EP 3 822 723 A1**
(43) Veröffentlichungstag der Anmeldung: **19.05.2021**
(21) Anmeldenummer: 19208506.6
(22) Anmeldetag: 12.11.2019
(51) Int. Cl.: G05B 23/02, G05B 19/418, H05K 3/34, B23K 1/008

(54) **VERFAHREN ZUM ÜBERWACHEN DES ZUSTANDES WENIGSTENS EINER IM BETRIEB BEVORZUGT BEWEGTEN KOMPONENTE EINER FERTIGUNGSANLAGE, VERFAHREN ZUM ANLERNEN, ANORDNUNG, FERTIGUNGSANLAGE, COMPUTERPROGRAMM UND COMPUTERLESBARES MEDIUM**

(71) Anmelder: Siemens Aktiengesellschaft, 80333 München (DE)
(72) Erfinder: Bittner, Dominik, 92548 Schwarzach bei Nabburg (DE); Deichmann, Jonas, 91058 Erlangen (DE); Frimberger, Tina, 92711 Parkstein (DE); Klose, Andreas, 92260 Ammerthal (DE); Liatsa, Athina, 91074 Herzogenaurach (DE); Meierhofer, Florian, 92421 Schwandorf (DE); Ott, Joachim, 92224 Amberg (DE); Reimann, Thorsten, 91052 Erlangen (DE)

(57) **Zusammenfassung**

Die Erfindung betrifft ein Verfahren zum Überwachen des Zustandes einer Komponente, insbesondere einer Transportkette (6), in einer Fertigungsanlage (1), bei dem
a) ein Überwachungsdatensatz (8) empfangen wird, der eine oder mehrere Reihen (9, 10) von der im Betrieb bewegten Komponente (6) zugeordneten Prozesswerten (11, 12) umfasst,
b) auf Basis der Prozesswerte (11, 12) Merkmalswerte (14) ermittelt werden, indem mehrere innerhalb des Erfassungszeitraumes (13) liegende Zeitfenster (15) betrachtet werden und für jedes Zeitfenster (15) für die darin liegenden Prozesswerte (11, 12) und/oder für darin liegende von den Prozesswerten (11, 12) abgeleitete Werte statistische Größen ermittelt werden,
c) die Merkmalswerte (14) standardisiert und/oder normalisiert werden,
d) auf die Merkmalswerte (14) wenigstens eine mathematische Methode zur Dimensionsreduktion angewendet wird, wodurch reduzierte Merkmalswerte (30) erhalten werden,
e) die reduzierten Merkmalswerte (30) einem angelernten Maschinen-Lern-Modell (31) als Eingangswerte zugeführt werden, und
f) das angelernte Maschinen-Lern-Modell (31) eine Zustandsinformation (37) für die im Betrieb bewegte Komponente (6) als Ausgangswert herausgibt.

Des Weiteren betrifft die Erfindung ein Verfahren zum Anlernen, eine Anordnung, eine Fertigungsanlage (1), ein Computerprogramm und ein computerlesbares Medium.

## Beschreibung

Die Erfindung betrifft ein Verfahren zum Überwachen des Zustandes wenigstens einer im Betrieb bevorzugt bewegten Komponente einer Fertigungsanlage. Des Weiteren betrifft die Erfindung ein Verfahren zum Anlernen eines Maschinen-Lern-Modells, das für die Überwachung des Zustandes wenigstens einer im Betrieb bevorzugt bewegten Komponente in einer Fertigungsanlage verwendet werden kann, eine Anordnung zum Durchführen eines Verfahrens zum Überwachen des Zustandes wenigstens einer im Betrieb bevorzugt bewegten Komponente in einer Fertigungsanlage, eine Fertigungsanlage, ein Computerprogramm und ein computerlesbares Medium.

Fertigungsanlagen umfassen diverse im Betrieb der Anlage bewegte Komponenten, die mit der Zeit verschmutzen bzw. verschmieren können. Ein Beispiel für solche Komponenten sind Transportketten, die in Öfen, insbesondere sogenannten Reflow-Öfen verwendet werden. Reflow-Öfen kommen u.a. zur Herstellung von (bedruckte) Leiterplatten (im Englischen:
(printed) circuit boards) bzw. Bestückung dieser mit Bauteilen zum Einsatz. Sie werden zur Durchführung des sogenannten Reflow-Löt-Verfahrens verwendet, das auch als Wiederaufschmelzlötverfahren bezeichnet werden kann, und bei dem es sich um ein gängiges Weichlotverfahren im Bereich der Elektrotechnik handelt. Bei dem Reflow-Löten wird Weichlot in Form von Lötpaste auf die Leiterplatte aufgetragen bevor diese mit Bauteilen bestückt wird. Die bestückte Leiterplatte wird anschließend erhitzt, wobei die Lötpaste schmilzt. Dabei werden die Leiterplatten mittels wenigstens einer Transportkette durch den Reflow-Ofen transportiert. Dabei verschmutzt bzw. verschmiert die Transportkette, wodurch beim Start des Reflow-Ofens Probleme, insbesondere aufgrund einer Schwergängigkeit der Transportkette auftreten und sich die Anlaufzeiten des Ofens verlängern können. Schließlich wird die Transportkette so schwergängig, dass ein Start des Ofens nicht mehr möglich ist und die Transportkette ausgetauscht werden muss, wodurch es zu einem längeren Stillstand des Reflow-Ofens kommt.

Da eine Verschmutzung der Transportkette derzeit erst dann erkannt werden kann, wenn kein ordnungsgemäßer Betrieb des Reflow-Ofens mehr möglich ist, müssen längere Anlaufzeiten, sowie mögliche Anlagenstillstandszeiten, welche die Produktivität des Reflow-Ofens erheblich beeinträchtigen, in Kauf genommen werden.

Ausgehend davon liegt der Erfindung die Aufgabe zugrunde, ein Verfahren zur Überwachung des Zustandes wenigstens einer im Betrieb bevorzugt bewegten Komponente, insbesondere Transportkette bereitzustellen, mit dem ein möglichst frühzeitiges Erkennen eines nicht ordnungsgemäßen Zustandes der wenigstens einen Komponente erfolgen kann. Darüber hinaus ist es eine Aufgabe der Erfindung, eine Anordnung zur Durchführung eines derartigen Verfahrens bereitzustellen.

Diese Aufgabe wird erfindungsgemäß durch ein Verfahren zum Überwachen des Zustandes wenigstens einer im Betrieb bevorzugt bewegten Komponente, insbesondere einer Transportkette, einer Fertigungsanlage gelöst, bei dem
a) ein Überwachungsdatensatz empfangen wird, der eine oder mehrere Reihen von der wenigstens einen im Betrieb bevorzugt bewegten Komponente zugeordneten Prozesswerten umfasst, wobei die Prozesswerte der oder der jeweiligen Reihe in einem Erfassungszeitraum an zeitlich beabstandeten Zeitpunkten in der Fertigungsanlage erfasst wurden und/oder von in einem Erfassungszeitraum an zeitlich beabstandeten Zeitpunkten in der Fertigungsanlage erfassten Messwerten abgeleitet sind,
b) auf Basis der Prozesswerte der oder der jeweiligen Reihe Merkmalswerte ermittelt werden, indem für die oder die jeweilige Reihe mehrere innerhalb des Erfassungszeitraumes liegende Zeitfenster betrachtet werden und für jedes Zeitfenster für die darin liegenden Prozesswerte und/oder für von diesen abgeleitete Werte statistische Größen ermittelt werden, wobei von den Prozesswerten abgeleitete Werte auch mittels der Prozesswerte mehrerer Reihen ermittelt werden können,
c) die Merkmalswerte standardisiert und/oder normalisiert werden,
d) auf die Merkmalswerte wenigstens eine mathematische Methode zur Dimensionsreduktion angewendet wird, wodurch reduzierte Merkmalswerte erhalten werden,
e) die reduzierten Merkmalswerte einem angelernten Maschinen-Lern-Modell als Eingangswerte zugeführt werden, und
f) das angelernte Maschinen-Lern-Modell eine Zustandsinformation für die wenigstens eine im Betrieb bewegte Komponente als Ausgangswert herausgibt.

Der Erfindung liegt also die Überlegung zugrunde, für die Zustandsüberwachung ein angelerntes Maschinen-Lern-Modell (englisch: machine learning model) zur Herausgabe einer Zustandsinformation zu verwenden, wobei diesem gezielt verarbeitete Daten zur Verfügung gestellt werden. Erfindungsgemäß werden Prozesswerte, die der bzw. den zu überwachenden, im Betrieb bevorzugt bewegten Komponente(n), insbesondere Transportkette(n), zugeordnet sind, zuerst zu Merkmalswerten und anschließend zu reduzierten Merkmalswerten verarbeitet. Die reduzierten Merkmalswerte werden dann dem angelernten Maschinen-Lern-Modell als Eingangswerte zugeführt, und das angelernte Maschinen-Lern-Modell gibt als Ausgangswert eine Zustandsinformation für die zu überwachende(n) Komponente(n) heraus.

Bei der Ermittlung der Merkmalswerte erfolgt eine erhebliche Vergrößerung des Merkmalsraumes, so dass aus einer geringen Anzahl von Reihen von Prozesswerten eine große Menge an Informationen gewonnen werden kann. Durch das Standardisieren und/oder Normalisieren der Merkmalswerte und die anschließende Anwendung einer mathematischen Methode zur Dimensionsreduktion, werden reduzierte Merkmalswerte erhalten, wobei der Merkmalsraum stark verkleinert wird und lediglich die relevantesten Informationen beibehalten werden. Durch das Zuführen der reduzierten Merkmalswerte an ein Maschinen-Lern-Modell kann dieser auf präzise Weise eine Zustandsinformation für die wenigstens eine im Betrieb bewegte Komponente ermitteln, ohne dass es zu einem unnötig großen Rechenaufwand kommt. Insbesondere wird durch die Anwendung einer mathematischen Methode zur Dimensionsreduktion und das Berechnen der reduzierten Merkmalswerte eine gute Generalisierbarkeit erreicht, so dass das Verfahren zur Überwachung der wenigstens einen im Betrieb bevorzugt bewegten Komponente an verschieden Fertigungsanlagen, beziehungsweise Reflow-Öfen, verwendet werden kann.

Vorteilhafter Weise kann durch dieses Verfahren ein nicht ordnungsgemäßer Zustand der im Betrieb bevorzugt bewegten beweglichen Komponente(n), insbesondere Transportkette(n), etwa eine (starke) Verschmutzung bzw. ein (starkes) Verschmieren dieser, frühzeitig zuverlässig erkannt werden. Dadurch kann die bzw. können die Komponente(n) rechtzeitig, bevorzugt im Rahmen einer geplanten Wartung ausgetauscht werden, sodass das Aufkommen längerer Anlaufzeiten und/oder nicht geplanter Anlagenstillstandszeiten reduziert werden kann. Die frühzeitige Erkennung des Austauschbedarfs hilft den reibungslosen Betrieb sicherzustellen. Sobald ein Bedarf des Tausches einer oder mehrerer Komponenten, insbesondere eines Kettentausches in einem Ofen erkannt wird, was über das erfindungsgemäße Verfahren früher möglich ist, insbesondere einen Monat früher als gemäß dem Stand der Technik, kann die Wartung geplant werden. Die Fertigungsanlage, insbesondere ein Ofen einer solchen, fällt nicht zu Beginn einer Schicht aus. Deswegen können Engpässe vermieden werden. Zudem kann die Produktionszeit verkürzt werden, da längere Anlaufzeiten aufgrund nicht ordnungsgemäßer Zustände verhindert werden.

Das erfindungsgemäße Verfahren hat sich als ganz besonders geeignet für die Überwachung von Transportketten von Reflow-Öfen erwiesen. In vielen Bereichen der diskreten Industrie werden Lötvorgänge mit Reflow-Öfen vorgenommen.

Die Erfindung kann auf alle diese Reflow Öfen ähnlicher Bauweise angewandt werden. Da Reflow-Öfen meist in einen Gesamtprozess eingeordnet sind, bedeuten Stillstände während der Produktion unter Umständen nicht nur einen Stillstand des Ofens, sondern auch vor- und nachgelagerter Produktionsschritte. Gesamtlaufzeiten können somit verkürzt und Gesamtstillstände durch geplante Wartung vermieden werden.

Selbstverständlich können mit dem erfindungsgemäßen Verfahren auch mehrere Komponenten einer Fertigungsanlage überwacht werden. Dann kann für jede zu überwachende Komponente ein Überwachungsdatensatz empfangen werden, der eine oder mehrere Reihen von der jeweiligen Komponente zugeordneten Prozesswerten umfasst. Beispielsweise kann ein Ofen, insbesondere Reflow-Ofen, mehr als eine Transportkette für die Förderung von Leiterplatten durch den Ofen aufweisen. Dann kann entweder nur eine der Transportketten überwacht werden oder es können mehrere, gegebenenfalls auch alle der vorhandenen Transportketten mittels des erfindungsgemäßen Verfahrens überwacht werden. Es sei angemerkt, dass Reflow-Öfen oftmals mehr als eine Transportkette umfassen, wobei die mehreren Ketten alle mit nur einem, den mehreren Ketten gemeinsamen Motor angetrieben werden können bzw. oftmals werden. Werden in diesem Falle für die Überwachung der mehreren Ketten Daten des einen Motors als zugeordnete Prozessdatenbetrachtet herangezogen, beispielsweise der Motorstrom und/oder die Motordrehzahl des einen die mehreren Ketten antreibenden Motors, wird für die zwei oder mehr Ketten nur ein Überwachungsdatensatz bereitgestellt bzw. in Schritt a) empfangen. Die Prozesswerte sind hier über den Motor jeder der von diesem angetriebenen Ketten zugeordnet. Die Zustandsinformation, die in Schritt f) erhalten wird, ist dann - insbesondere unter der Annahme, dass alle Ketten gleichermaßen verschmutzen - eine Zustandsinformation für alle von dem einen Motor angetriebene Ketten.

Nach einer vorteilhaften Ausgestaltung wird zusätzlich wenigstens ein Warnsignal und/oder wenigstens eine Warnnachricht ausgegeben, wenn in Schritt f) eine Zustandsinformation herausgegeben wird, welche einen schlechten bzw. nicht ordnungsgemäßen Zustand der wenigstens einen Komponente indiziert. Dadurch kann gewährleistet werden, dass nach einer Feststellung eines nicht ordnungsgemäßen Zustands der im Betrieb bevorzugt bewegten Komponente(n) diese in naher Zukunft im Rahmen einer geplanten Wartung ausgetauscht werden kann bzw. können. Es kann beispielsweise ein akustisches Warnsignal ausgegeben werden und/oder ein optisches Warnsignal. Alternativ oder zusätzlich kann wenigstens eine Warnnachricht, etwa per bzw. als SMS und/oder per bzw. als Mail abgesendet werden.

Gegenstand der Erfindung ist auch ein Verfahren zum Anlernen eines Maschinen-Lern-Modells, welches für die Überwachung des Zustands wenigstens einer im Betrieb bevorzugt bewegten Komponente, insbesondere wenigstens einer Transportkette, einer Fertigungsanlage verwendet werden kann, bei dem
aa) mehrere Anlerndatensätze empfangen werden, wobei jeder Anlerndatensatz eine oder mehrere Reihen von wenigstens einer im Betrieb bevorzugt bewegten Komponente zugeordneten Prozesswerten umfasst, wobei die Prozesswerte der oder der jeweiligen Reihe in einem Erfassungszeitraum an zeitlich beabstandeten Zeitpunkten in einer die wenigstens eine Komponente umfassenden Fertigungsanlage erfasst wurden und/oder von in einem Erfassungszeitraum an zeitlich beabstandeten Zeitpunkten in einer die wenigstens eine Komponente umfassenden Fertigungsanlage erfassten Messwerten abgeleitet sind, und wobei jeder Anlerndatensatz eine der oder den Reihen des jeweiligen Anlerndatensatzes zugeordnete Zustandsinformation über die wenigstens eine im Betrieb bewegte Komponente umfasst,
bb) auf Basis der Prozesswerte der Reihen der Anlerndatensätze Merkmalswerte ermittelt werden, wobei für jede Reihe der Anlerndatensätze mehrere innerhalb des Erfassungszeitraumes liegende Zeitfenster betrachtet werden und für jedes Zeitfenster für die darin liegenden Prozesswerte und/oder für von diesen abgeleitete Werte statistische Größen als Merkmalswerte ermittelt werden, wobei von den Prozesswerten abgeleitete Werte auch mittels der Prozesswerte mehrerer Reihen ermittelt werden können,
cc) die Merkmalswerte standardisiert und/oder normalisiert werden,
dd) auf die Merkmalswerte wenigstens eine mathematische Methode zur Dimensionsreduktion angewendet wird, um reduzierte Merkmalswerte erhalten,
ee) die reduzierten Merkmalswerte zusammen mit den diesen jeweils zugeordneten Zustandsinformationen für die wenigstens eine Komponente, insbesondere die wenigstens eine Transportkette, dem Maschinen-Lern-Modell zugeführt werden, und
ff) das Maschinen-Lern-Modell anhand der reduzierten Merkmalswerte und den zugeordneten Zustandsinformationen angelernt wird.

Es werden also Prozessdaten, die wenigstens einer Komponente zugeordnet sind, herangezogen und aus diesen insbesondere Machine Learning Features ermittelt, die eine Komponente bzw. Komponenten im ordnungsgemäßen und nicht ordnungsgemäßen Zustand, insbesondere (eine) saubere und eine verschmutzte Komponente(n), im Feature-Raum unterscheidbar machen. Der hochdimensionale Feature-Raum wird, insbesondere, um bessere Generalisierbarkeit herzustellen, reduziert, und es wird ein Maschinen-Lern-Modell, insbesondere Klassifikator, trainiert, bevorzugt mit dem Surpervised Ansatz.

In bevorzugter Weise ist bei dem Verfahren zum Überwachen des Zustands wenigstens einer im Betrieb bevorzugt bewegten Komponente, insbesondere wenigstens einer Transportkette, einer Fertigungsanlage das in Schritt e) verwendete Maschinen-Lern-Modell mittels des oben angegebenen Verfahrens zum Anlernen eines Maschinen-Lern-Modells angelernt bzw. angelernt worden.

Die Schritte bb), cc) und dd) des erfindungsgemäßen Verfahrens zum Anlernen und die Schritte b), c) und d) des erfindungsgemäßen Verfahrens zur Überwachung können überwiegend analog sein. Im Rahmen des Anlernens werden jedoch mehrere Datensätze berücksichtigt.

Bevorzugt gilt, dass die im Rahmen des Anlernens in Schritt cc) verwendete Standardisierungs- und/oder Normierungsfunktion und/oder deren Parameter, insbesondere diejenigen Parameter, mit denen die Merkmalswerte der Anlerndatensätze standardisiert und/oder normiert werden, gespeichert wird. Mit anderen Worten werden insbesondere die Parameter der Standardisierungs- /Normierungsfunktion, die die Eingangswerte auf die Ausgangswerte abbilden, gespeichert.

Besonders bevorzugt gilt dann, dass in Schritt c) die gespeicherte Standardisierungs- bzw. Normierungsfunktion und/oder die gespeicherten Parameter verwendet werden, um die Merkmalswerte des Überwachungsdatensatzes zu standardisieren bzw. zu normieren.

Entsprechend kann in Weiterbildung vorgesehen sein, dass in Schritt c) eine Standardisierungsfunktion und/oder eine Normierungsfunktion und/oder Parameter verwendet werden, die im Rahmen des Anlernens des Maschinen-Lern-Modells, dem in Schritt e) die reduzierten Merkmalswerte zusammen mit den diesen jeweils zugeordneten Zustandsinformationen zugeführt werden, ermittelt wurden.

In der späteren Anwendung wird dann mit anderen Worten insbesondere die Standardisierungs- und/oder Normierungsfunktion und/oder werden die zuvor festgelegten Parameter verwendet, um die Eingangswerte im Betrieb auf die Ausgangswerte im Betrieb abzubilden. Besonders bevorzugt sind die gespeicherten Parameter der Mittelwert des Anlerndatensatzes bzw. der Anlerndatensätze und die Skalierungsfunktion, die eine Varianz = 1 für den Anlerndatensatz bzw. die Anlerndatensätze herbeiführt.

Weiterhin bevorzugt werden die Parameter der in Schritt dd) durchgeführten wenigstens einen mathematischen Methode zur Dimensionsreduktion, insbesondere der einer in Schritt dd) durchgeführten Hauptkomponentenanalyse gespeichert.

Besonders bevorzugt gilt dann, dass diese in Schritt d) verwendet werden. Wird eine Hauptkomponentenanalyse durchgeführt, sind die Parameter bevorzugt die Faktoren der Linearkombination der Hauptkomponentenanalyse.

Eine weitere Ausführungsform zeichnet sich daher dadurch aus, dass in Schritt d) im Rahmen der wenigstens einen mathematischen Methode zur Dimensionsreduktion Parameter verwendet werden, die im Rahmen des Anlernens des Maschinen-Lern-Modells, dem in Schritt e) die reduzierten Merkmalswerte zusammen mit den diesen jeweils zugeordneten Zustandsinformationen zugeführt werden, ermittelt wurden.

Bei den vorgenannten Ausführungsformen werden mit anderen Worten, statt Parameter der Standardisierung/Normierung und der wenigstens einen Methode zur Dimensionsreduktion, insbesondere Hauptkomponentenanalyse, bei der Überwachung wie beim Anlernen auf die Daten anzupassen, bevorzugt die im Rahmen des Anlernens angepassten Funktionen verwendet. Dies basiert insbesondere auf der Annahme, dass die Anlerndatensätze die gleichen statistischen Eigenschaften besitzen wie die späteren Daten im Betrieb bei der Überwachung. Das ist bei Machine Learning oftmals eine Grundannahme.

Weiter bevorzugt gilt, dass das Maschinen-Lern-Modell nach dem Anlernen in Schritt ff) gespeichert wird, um dann für die Überwachung herangezogen werden zu können.

Mehrere bedeutet vorliegend zwei, drei oder mehr. Dass mehrere Anlerndatensätze empfangen werden bedeutet also, dass zwei, drei, vier oder auch mehr Anlerndatensätze empfangen werden. Dass ein Datensatz mehrere Reihen umfasst bedeutet entsprechend, dass er zwei, drei oder mehr Reihen aufweist.

Die Schritte a) bis f) bzw. aa) bis ff) werden zweckmäßiger Weise mittels bzw. von wenigstens einer Recheneinrichtung, etwa wenigstens einem PC, insbesondere Industrie-PC durchgeführt.

Besonders bevorzugt handelt es sich bei der Fertigungsanlage um einen Ofen, insbesondere Reflow-Ofen, der bevorzugt zum Löten von Leiterplatten mit einer Lötpaste zum Einsatz kommt, oder die Fertigungsanlage umfasst wenigstens einen solchen.

Die wenigstens eine im Betrieb bevorzugt bewegte Komponente ist insbesondere eine mechanische Komponente. Besonders bevorzugt ist es eine Transportkette eines Ofens, insbesondere Reflow-Ofens, welche bevorzugt dem Transport von Leiterplatten durch den Ofen dient bzw. dienen. Eine solche Transportkette kann bzw. solche Transportketten können Bestandteil eines der Förderung von Leiterplatten durch den Ofen dienenden Transportbandes sein.

Als Maschinen-Lern-Modell kann prinzipiell jedes Modell dienen, über welches Eingangswerte bzw. -daten, vorliegend insbesondere reduzierte Merkmalswerte, mit Ausgangswerten bzw. - daten, vorliegend insbesondere Zustandsinformationen, assoziierbar sind bzw. assoziiert werden (können).

Das Maschinen-Lern-Modell kann in an sich bekannter Weise wenigstens einen Maschinen-Lern-Algorithmus umfassen bzw. dadurch gegeben sein.

Das Maschinen-Lern-Modell ist in besonders bevorzugter Ausgestaltung durch einen Klassifikator gegeben bzw. umfasst wenigstens einen solchen.

Ein Klassifikator ist eine mathematische Abbildungsfunktion, die einen Eingangsvektor auf einen Ausgangsvektor abbildet. Wenn, rein beispielhaft, der Eingangsvektor, auch Merkmalsvektor, aus den einzelnen Farbwerten der Pixel eines Bildes besteht, kann ein möglicher Ausgangsvektor, auch Klassenvektor, dann beispielsweise für zwei zu unterscheidende Klassen ein 1x2-Dimensionaler Vektor mit den Klassen "Hund" und "Katze" sein. Die Abbildungsfunktion wird mittels eines Lernverfahrens parametriert, infolgedessen der Fehler von tatsächlicher Klasse und durch den Klassifikator ausgegebenen Klasse minimiert wird.

Der Klassifikator kann als eine Support Vector Machine, insbesondere eine Support Vector Machine mit Radialbasisfunktion, oder ein künstliches neuronales Netz oder eine Nächste-Nachbarn-Klassifikation oder ein Entscheidungsbaum oder ein Random Forest Klassifikator ausgestaltet sein oder eine Support Vector Machine, insbesondere eine Support Vector Machine mit Radialbasisfunktion, und/oder ein künstliches neuronales Netz und/oder eine Nächste-Nachbarn-Klassifikation und/oder einen Entscheidungsbaum und/oder einen Random Forest Klassifikator umfassen.

Besonders bevorzugt gilt, dass der Klassifikator als Support Vector Machine mit einer Radialbasisfunktion, insbesondere einer Radialbasisfunktion als Kernel ausgebildet ist oder eine solche umfasst. Vereinfacht gesagt gibt das Kernel die Form der Entscheidungsfunktion vor, die bestimmt, ob ein Zustand, bzw., wenn in besonders bevorzugter Ausgestaltung Prozessdaten aus einer Anlaufphase betrachtet werden, ein Anlauf als gut oder schlecht klassifiziert wird.

Zu Support Vector Machines siehe beispielsweise den Aufsatz "Support-Vector Networks" von C. Cortes und V. Vapnik, Machine Learning, Volume 20, Issue 3, Seiten 273-297 (1995), zu künstlichen neuronalen Netzen siehe beispielsweise das Buch "Theorie der Neuronalen Netze: Eine systematische Einführung" von Raül Rojas, 4. korrigierter Nachdruck, Springer, Berlin u. a. 1996, ISBN 3-540-56353-9, zu Nächste-Nachbarn-Klassifikation siehe beispielsweise den Aufsatz "An Introduction to Kernel and Nearest-Neighbor Nonparametric Regression" von N. S. Altmann, The American Statistician, Vol. 46. No. 3, August 1992, Seiten 175-185, zu Entscheidungsbäumen siehe beispielsweise den Artikel "Induction of Decision Trees" von J. R. Quinlan, Machine Learning 1, 1 (März 1986), Seiten 81-109, zum Random Forest Klassifikator siehe beispielsweise den Aufsatz "Random Decision Forests" von Tin Kam Ho, Proceedings of 3rd International Conference on Document Analysis and Recognition, Datum der Konferenz: 14. bis 16. August 1995, ISBN: 0-8186-7128-9, DOI: 10.1109/ICDAR.1995.598994.

Das Maschinen-Lern-Modell kann auch wenigstens einen Regressor umfassen oder durch einen solchen gegeben sein. Dann kann es sich bei dem Regressor in bevorzugter Ausgestaltung um einen Support Vector Machine Regressor (siehe beispielsweise den Aufsatz "Support Vector Regression Machines", von Drucker, Harris; Burges, Christ. C.; Kaufman, Linda; Smola, Alexander J.; and Vapnik, Vladimir N. (1997), in Advances in Neural Information Processing Systems 9, NIPS 1996, 155-161, MIT Press) oder ein künstliches neuronales Netz (siehe beispielsweise das Buch "Theorie der Neuronalen Netze: Eine systematische Einführung" von Raúl Rojas, 4. korrigierter Nachdruck, Springer, Berlin u. a. 1996, ISBN 3-540-56353-9) oder einen Nächste-Nachbarn-Regressor (siehe beispielsweise den Aufsatz "An Introduction to Kernel and Nearest-Neighbor Nonparametric Regression" von N. S. Altmann, The American Statistician, Vol. 46. No. 3, August 1992, Seiten 175-185) oder einen Random Forest Regressor (siehe beispielsweise den Aufsatz "Random Forests" von Leo Breiman, Machine Learning, Volume 45, Issue 1, Seiten 5-32 (2001)) oder einen Regressionsbaum (siehe beispielsweise den Artikel "Induction of Decision Trees" von J. R. Quinlan, Machine Learning 1, 1 (März 1986), Seiten 81-109) handeln.

Das Anlernen des Maschinen-Lern-Modells kann überwacht oder unüberwacht von statten gehen. Beim überwachten Lernen sind die zu unterscheidenden Klassen bereit bekannt, beispielsweise ob die Kette im Ofen getauscht werden muss, oder ob eine Wartung nicht nötig ist. Bei unüberwachtem Lernen sind die Klassen nicht bekannt. Es werden dann sogenannte Cluster gesucht. Cluster sind dadurch definiert, dass alle Merkmalsvektoren innerhalb eines Clusters ähnlich zueinander und unähnlich zu Merkmalsvektoren anderer Cluster sind.

Prozesswerte sind Werte von Prozess- bzw. Zustandsgrößen der im Betrieb bevorzugt bewegten Komponente bzw. Komponenten, insbesondere der Transportkette bzw. Transportkette, und/oder von der bzw. den im Betrieb bevorzugt bewegten Komponente(n) zugeordneten weiteren Komponenten der Anlage, etwa wenigstens eines Motors, welcher die Komponente bzw. die Komponenten während des Betriebs antreibt. Beispiele für Prozesswerte, die sich als besonders geeignet erwiesen haben, sind Werte des Motorstroms, der Motorspannung, der Motorlast und/oder der Motordrehzahl wenigstens eines dem Antrieb der im Betrieb bevorzugt bewegten Komponente(n) dienenden Motors.

Die Prozesswerte können beispielsweise mittels wenigstens eines Sensors in der bzw. der jeweiligen Fertigungsanlage erfasst werden bzw. worden sein. Es ist aber auch nicht ausgeschlossen, dass Prozesswerte der Reihen durch Werte gegeben sind, die nicht direkt selber gemessen, sondern ihrerseits von gemessenen Größen abgeleitet wurden. Selbstverständlich kann es auch sein, dass eine oder mehrere Reihen direkt gemessen Größen umfassen, während eine oder mehrere andere Reihen Größen umfassen, die von gemessenen Größen abgeleitet, insbesondere aus gemessenen Größen berechnet wurden. Rein beispielhaft sei hier genannt, dass eine Spannung gemessen und ein Strom berechnet wird.

Die mehreren Anlerndatensätze umfassen zweckmäßigerweise Prozesswerte aus mehreren zurückliegenden Betrieben, mit anderen Worten historische Daten, für die jeweils bekannt war bzw. ist, welche Zeitspannen nach dem Ende des jeweiligen Erfassungszeitraums ein Austausch der (jeweiligen) Komponente erforderlich war.

Es sei angemerkt, dass die bzw. die jeweilige Komponente, der die Prozesswerte aus den Anlerndatensätzen zugeordnet sind, von derjenigen Komponente bzw. denjenigen Komponenten, die dann mittels des angelernten Maschinen-Lern-Modells erfindungsgemäß überwacht werden, verschieden sein kann bzw. verschieden sein können. Bevorzugt ist diejenige Komponente bzw. sind diejenigen Komponenten, für welche die Anlerndaten erfasst werden bzw. wurden, und diejenige bzw. diejenigen Komponente, die mit dem angelernten Maschinen-Lern-Modell überwacht werden, baugleich oder zumindest ähnlich. Die mehreren Anlerndatensätze können mit anderen Worten zu verschiedenen jedoch bevorzugt baugleichen oder zumindest ähnlichen Komponenten gehören bzw. von solchen stammen. Bevorzugt werden mit dem angelernten Maschinen-Lern-Modell Komponenten des gleichen Modells überwacht, für welche auch die Anlerndatensätze erfasst wurden, etwa eine Transportkette bzw. Transportketten des gleichen Modells. Die Prozesswerte der Anlerndatensätze bzw. die Messwertem von welchen diese abgeleitet sind, können in der gleichen Fertigungsanlage erfasst werden bzw. worden sein, in der auch das Überwachungsverfahren durchgeführt wird bzw. durchzuführen ist, beispielsweise an einer oder mehreren Komponenten, insbesondere Transportketten, die dort in einem vor der Überwachung liegenden Zeitraum in Betrieb waren. Alternativ oder zusätzlich ist es auch möglich, dass Anlerndatensätze mit Prozesswerten genutzt werden, die aus einer oder mehreren anderen Fertigungsanlagen stammen, die eine oder mehrere zu der/den zu überwachenden Komponente(n) baugleiche oder zumindest ähnliche Komponenten aufweisen.

Die Zustandsinformationen der Anlerndatensätze können insbesondere anhand der Länge der Zeitspanne zwischen dem Ende des Erfassungszeitraums des jeweiligen Anlerndatensatzes und dem darauffolgenden Auftreten eines nicht ordnungsgemäßen Zustands und/oder erforderlichen Austauschs der (jeweiligen) Komponente ermittelt werden bzw. worden sein. Anhand der Betrachtung historischer Daten, für welche im Rückblick bekannt ist, wann im Anschluss an die Erfassung der Prozesswerte Probleme auftraten bzw. ein Austausch erforderlich war oder auch nicht, können geeignete Beispielsdatensätze für "gut" und "schlecht" erhalten werden, die für das Anlernen des Maschinen-Lern-Modells besonders geeignet sind. Dadurch kann das Maschinen-Lern-Modell derartig angelernt werden, dass es eine Zustandsinformation, die einem schlechten oder nicht ordnungsgemäßen Zustand der Komponente(n) entspricht, früh- bzw. rechtzeitig herausgibt. Ist beispielsweise bekannt, dass vier Wochen oder früher im Anschluss an den den Prozesswerten eines Datensatzes zugeordneten Erfassungszeitraum ein Austausch der betrachteten Komponente(n) erforderlich war, kann diesen Prozesswerten "schlecht" oder "nicht ordnungsgemäß" als Zustandsinformation zugeordnet werden bzw. worden sein. War beispielsweise in den sich an einen Erfassungszeitraum anschließenden zwei Monaten kein Austausch erforderlich, kann den Prozesswerten "gut" bzw. "ordnungsgemäß" als Zustandsinformation zugeordnet werden. Es sei betont, dass diese Zeiträume rein beispielhaft zu verstehen sind und die einer Unterscheidung zwischen gut/schlecht bzw. ordnungsgemäß/nicht ordnungsgemäß dienenden Zeiträume auch ganz anders gewählt sein können, insbesondere abhängig vom konkreten Fall.

Die Anlerndatensätze umfassen zweckmäßiger Weise wenigstens einen Datensatz, bevorzugt mehrere Datensätze mit einer Zustandsinformation, welche einem guten bzw. ordnungsgemäßen Zustand der im Betrieb bevorzugt bewegten Komponente(n) entspricht, und wenigstens einen Datensatz, bevorzugt mehrere Datensätze mit einer Zustandsinformation, welche einem schlechten oder nicht ordnungsgemäßen Zustand der im Betrieb bevorzugt bewegten Komponente(n) entspricht. So kann das Maschinen-Lern-Modell besonders zuverlässig angelernt werden, zwischen guten und schlechten bzw. ordnungsgemäßen und nicht ordnungsgemäßen Zuständen - und ggf. dazwischen liegenden Zuständen - zu unterscheiden.

Es sei angemerkt, dass nur zwei verschiedene Zustandsinformationen, etwa gut und schlecht bzw. ordnungsgemäß und nicht ordnungsgemäß gegeben sein können oder auch mehr als zwei. Beispielswiese kann eine "Zustandsskala" vorgesehen sein, die sich z.B. zwischen 0 und 1 erstreckt, wobei 0 das schlechte Ende bildet und 1 das Gute und auch Werte für die jeweilige Zustandsinformation möglich sind, die zwischen gut und schlecht liegen. Dies trifft insbesondere für den Fall zu, dass das Maschinen-Lern-Modell einen Regressor umfasst bzw. durch einen Regressor gegeben ist.

Die reduzierten Merkmalswerte repräsentieren Eingangswerte und die Zustandsinformationen Ausgangswerte für das bzw. des Maschinen-Lern-Modells. Im angelernten Zustand kann das Maschinen-Lern-Modell, wenn ihm die reduzierten Merkmalswerte, die aus einem Überwachungsdatensatz ermittelt wurden als Eingangswerte zugeführt werden, eine zugehörige Zustandsinformation für die Komponente bzw., im Falle mehrerer, für die Komponenten, als Ausgangswert ausgeben.

Das Maschinen-Lern-Modell kann eine Eingangsschnittstelle für den Empfang der Eingangswerte und eine Ausgangsschnittstelle für die Ausgabe der Ausgangswerte haben.

Bevorzugt gilt für den Fall, dass wenigstens ein Anlerndatensatz und/oder der Überwachungsdatensatz zwei oder mehr Reihen umfasst, der Erfassungszeitraum für beide bzw. alle Reihen des jeweiligen Datensatzes zumindest im Wesentlichen gleich ist. Auch kann vorgesehen sein, dass die Prozesswerte verschiedener Reihen eines Datensatzes jeweils an den gleichen voneinander beabstandeten Zeitpunkten gemessen wurden. Beispielsweise wurden innerhalb eines Erfassungszeitraumes an zeitlich voneinander beabstandeten Messzeitpunkten jeweils gleichzeitig der Motorstrom und die Motordrehzahl und ggf. weitere Größen des die Komponente(n) antreibenden Motors erfasst, so dass für eine Mehrzahl von beabstandeten Messzeitpunkten jeweils zwei oder mehr Größen für eine oder mehrere Ketten vorliegen.

In bevorzugter Weise umfassen die Anlerndatensätze und/oder der Überwachungsdatensatz jeweils wenigstens zwei Reihen von Prozesswerten, wobei bevorzugt die jeweils eine Reihe Werte der Drehzahl eines die Komponente(n), insbesondere Transportkette(n), antreibenden Motors als Prozesswerte umfasst und die jeweils andere Reihe Werte des Motorstroms des die Komponente(n), insbesondere Transportkette(n), antreibenden Motors als Prozesswerte umfasst. Vorzugsweise kann mindestens eine der Reihen von Prozesswerten durch einen an der Fertigungsanlage angebrachten Sensor gemessen werden oder gemessen worden sein. Ein solcher Sensor ist zweckmäßiger Weise (jeweils) derart angeordnet, dass die Erfassung eines der/den bewegten Komponente(n) zugeordneten Prozesswertes mit diesem möglich ist.

Nach einer weiteren bevorzugten Ausführungsform sind die Zeitpunkte, an denen die Prozesswerte erfasst werden, um maximal 1 Sekunde zueinander beabstandet. Sie können beispielsweise um eine Zeitspanne zu- bzw. voneinander beabstandet sein, die zwischen 100 Millisekunden und 1 Sekunde liegt. Vorteilhafterweise kann der Erfassungszeitraum des Anlerndatensatzes und/oder des Überwachungsdatensatzes einer Anlaufzeit der im Betrieb bevorzugt bewegten Komponente(n) entsprechen. Dabei kann die Anlaufzeit der Komponente(n) insbesondere einem Zeitraum von 30 Minuten, besonders bevorzugt einem Zeitraum von 15 Minuten nach der Bewegungsaufnahme der Komponente(n) im Anschluss an einen Stillstand dieser umfassen. Da sich ein nicht ordnungsgemäßer Zustand der Komponente(n), bevorzugt Transportkette(n), insbesondere während der Anlaufzeit bemerkbar macht, kann der Erfassungszeitraum, in welchem die Prozesswerte erfasst werden, somit auf den relevantesten Zeitraum begrenzt werden. Wird nur auf die Anlaufphase abgestellt, werden insbesondere nur Zeitpunkte betrachtet, bei denen erfahrungsgemäß auch tatsächlich Probleme auftreten. Bei Stillstand eines Ofens, insbesondere Reflow-Ofens, beispielsweise sowie, wenn der Ofen aufgewärmt und eingelaufen ist, ist die Schwerfälligkeit der Transportkette(n) in der Regel überwunden und keine verwertbaren Informationen in den Daten zu vermuten.

Stehen Daten für einen kompletten Betriebszyklus von Anlauf bis Bewegungsende einer Komponente bzw. ggf. mehrere Komponenten, insbesondere Transportkette(n) eines Ofens, zur Verfügung, kann aus einem solchen Gesamtdatensatz zunächst derjenige Teil extrahiert werden, welcher einer Anlaufzeit, beispielsweise von 30 oder 15 Minuten entspricht.

Nach einer weiteren bevorzugten Ausführungsform weisen die innerhalb des Erfassungsraums liegenden Zeitfenster die gleiche Zeitdauer auf. Vorzugsweise kann die Zeitdauer eines Zeitfensters, bzw. der Zeitfenster, größer sein als die Zeitdauer zwischen dem Beginn zweier benachbarter Zeitfenster, so dass sich jeweils benachbarte Zeitfenster überlappen. Für eine Messreihe mit einer Mehrzahl von nacheinander erfassten Werten auf eine Mehrzahl von überlappenden Zeitfenster abzustellen, wird auch als Rolling-Window-Verfahren bezeichnet. Durch das Überlappen der Zeitfenster kann vermieden werden, dass ein abnormaler Wert einer der Prozesswerte, der am Rande eines Fensters liegt, nur teilweise oder gar nicht berücksichtigt wird. Es kann zum Beispiel sein, dass ein Hinweis auf einen fehlerhaften Zustand in der Maschine durch ein bestimmtes Muster in den Daten ausgeprägt ist. Ohne hinreichende Überlappung befindet sich das Muster möglicherweise nicht vollständig in einem Fenster, sodass die Information verloren ginge.

Vorteilhafter Weise können in Schritt b) bzw. bb) aus den Prozesswerten einer jeweiligen Reihe mehrere abgeleitete Werte ermittelt werden, beispielsweise der Absolutbetrag und/oder das Quadrat des jeweiligen Prozesswertes und/oder die Ableitung des jeweiligen Prozesswertes. Als Ableitung kann dabei bevorzugt die erste Ableitung, insbesondere die erste Ableitung nach der Zeit ermittelt werden. Vorzugweise können die Anlerndatensätze und/oder der Überwachungsdatensatz außerdem jeweils wenigstens zwei Reihen von Prozesswerten umfassen, wobei in Schritt b) bzw. bb) - gegebenenfalls zusätzlich zu weiteren abgeleiteten Werten, wie etwa dem Absolutbetrag und/oder dem Quadrat von Prozesswerten - die Verhältnisse der Prozesswerte von wenigstens zwei Reihen als von den Prozesswerten abgeleitete Werte berechnet werden. Insbesondere können als abgeleitete Werte die Verhältnisse zweier Prozesswerte für die jeweiligen Zeitfenster der Reihen berechnet werden. Umfasst beispielweise der jeweilige Anlerndatensatz und/oder der Überwachungsdatensatz eine Reihe mit Werten des Motorstromes und eine Reihe mit Werten der Drehzahl eines die Komponente(n), insbesondere Transportkette(n), antreibenden Motors, kann als (eine) abgeleitete Größe das Verhältnis von Motorstrom zu Drehzahl und/oder das Verhältnis von Drehzahl zu Motorstrom gebildet werden.

In bevorzugter Ausgestaltung werden in Schritt b) bzw. bb) als statistische Größen Maxima und/oder das Minima und/oder Mittelwerte und/oder Varianzen von Prozesswerten und/oder von den Prozesswerten abgeleiteten Werte ermittelt. In besonders bevorzugter Weiterbildung werden als statistische Größen das Maximum und/oder das Minimum und/oder der Mittelwert und/oder die Varianz der Prozesswerte und/oder der von diesen abgeleiteten Werte aus wenigstens einem Zeitfenster, bevorzugt allen Zeitfenstern, ermittelt. Beispielsweise kann für alle Prozesswerte und/oder alle von den Prozesswerten abgeleitete Werte, etwa Absolutbeträge und/oder Quadrate der Prozesswerte, das Maximum und das Minimum und der Mittelwert und die Varianz für diejenigen Prozess- bzw. davon abgeleitete Werte berechnet werden, die jeweils in einem Fenster liegen.

Weiterhin kann vorgesehen sein, dass die Anlerndatensätze und/oder der Überwachungsdatensatz ebenfalls jeweils die Zeitdauer eines vorherigen Betriebs der wenigstens einen Komponente und/oder die Zeitdauer einer Pause zwischen dem vorherigen Betrieb der wenigstens einen Komponente und dem Beginn des Erfassungszeitraums umfassen. Diese Werte können den in Schritt b) bzw. bb) ermittelten Merkmalswerten als zusätzliche Merkmalswerte hinzugefügt und bevorzugt in Schritt c) bzw. cc) ebenfalls normiert und/oder standardisiert werden. Durch die zusätzliche Aufnahme dieser Werte können dem Merkmalsraum weitere Informationen beigefügt werden, die ein besonders zuverlässiges Anlernen des Maschinen-Lern-Modells beziehungsweise ein besonders zuverlässiges Zuordnen einer Zustandsinformation durch das angelernte Maschinen-Lern-Modell ermöglichen.

Gemäß einer weiteren bevorzugten Ausgestaltung wird in Schritt d) bzw. dd) als mathematische Methode zur Dimensionsreduktion eine Hauptkomponentenanalyse (englisch: Principal Component Analysis, kurz: PCA), bzw. eine eine Hauptkomponentenanalyse einschließende Methode durchgeführt. Im Rahmen einer Hauptkomponentenanalyse werden in an sich hinlänglich vorbekannter Weise Linearkombinationen, vorliegend insbesondere aus Merkmalen eines hochdimensionalen Merkmalsraums, gebildet. Dann werden zweckmäßiger Weise nur solche Linearkombinationen (Hauptkomponenten) verwendet, die eine große Varianz aufweisen und demnach als entscheidungsrelevant angesehen werden können. Die Dimensionsreduktion entsteht mit anderen Worten dadurch, dass nur die wichtigsten Linearkombinationen verwendet werden.

Eine weitere Ausführungsform zeichnet sich dadurch aus, dass das Maschinen-Lern-Modell auf einem Edge-Gerät angelernt und/oder eingesetzt wird. Unter einem Edge-Gerät ist insbesondere in an sich bekannter Weise ein Gerät zu verstehen, welches am Rande eines Netzwerkes der Fertigungsanlage angeordnet ist. Das Edge-Gerät, auf dem das Maschinen-Lern-Modell angelernt und/oder eingesetzt wird, kann auch als Gate zu einer Cloud dienen.

Gegenstand der Erfindung ist auch eine Anordnung zum Durchführen eines oben beschriebenen Verfahrens zum Überwachen des Zustandes wenigstens einer im Betrieb bevorzugt bewegten Komponente, insbesondere wenigstens einer Transportkette, einer Fertigungsanlage aufweisend
zumindest einen Sensor zum Erfassen einer oder mehrerer Reihen von wenigstens einer im Betrieb bevorzugt bewegten Komponente, insbesondere wenigstens einer Transportkette, zugeordneten Prozesswerten, und
eine Rechenmaschine, die dazu ausgebildet und/oder eingerichtet ist,
einen Überwachungsdatensatz zu empfangen, der eine oder mehrere Reihen von der wenigstens einen Komponente zugeordneten Prozesswerten umfasst, wobei die Prozesswerte mittels des wenigstens einen Sensors in einem Erfassungszeitraum an zeitlich beabstandeten Zeitpunkten erfasst wurden und/oder von mittels des zumindest einen Sensors in einem Erfassungszeitraum an zeitlich beabstandeten Zeitpunkten erfassten Messwerten abgeleitet sind,
mehrere innerhalb des Erfassungszeitraumes liegende Zeitfenster zu identifizieren und für die in jedem Zeitfenster liegenden Prozesswerte und/oder für von diesen abgeleitete Werte statistische Größen als Merkmalswerte zu berechnen, wobei von den Prozesswerten abgeleitete Werte auch auf Basis der Prozesswerte mehrerer Reihen ermittelt werden können,
die Merkmalswerte zu standardisieren und/oder zu normalisieren,
wenigstens eine mathematische Methode zur Dimensionsreduktion auf die Merkmalswerte anzuwenden, um reduzierte Merkmalswerte zu erhalten,
mittels eines angelernten Maschinen-Lern-Modells anhand der reduzierten Merkmalswerte eine diesen zugehörige Zustandsinformation zu ermitteln,
wobei die Anordnung bevorzugt dazu ausgestaltet und/oder eingerichtet ist, wenigstens ein Warnsignal und/oder wenigstens eine Warnnachricht herauszugeben, wenn eine Zustandsinformation ermittelt wird, die einen nicht ordnungsgemäßen Zustand der wenigstens einen Komponente indiziert.

Ein weiterer Gegenstand der vorliegenden Erfindung ist ein Computerprogramm umfassend Programmcode-Mittel, die bei der Ausführung des Programms auf wenigstens einem Computer den wenigstens einen Computer veranlassen, die Schritte des erfindungsgemäßen Verfahrens zur Überwachung wenigstens einer im Betrieb bevorzugt bewegten Komponente, insbesondere wenigstens einer Transportkette, und/oder des erfindungsgemäßen Verfahrens zum Anlernen eines Maschinen-Lern-Modells durchzuführen.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Überwachung wenigstens einer im Betrieb bevorzugt bewegten Komponente, insbesondere einer Transportkette, und/oder des erfindungsgemäßen Verfahrens zum Anlernen eines Maschinen-Lern-Modells durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Seitenansicht einer Anlage zum Bestücken von Leiterplatten mit Bauteilen,
- FIG 2: eine rein schematische Teildarstellung des Inneren des Reflow-Ofens der Anlage aus Figur 1,
- FIG 3: eine rein schematische Seitenansicht eines Endbereiches einer Transportkette des Reflow-Ofens aus Figur 2,
- FIG 4: ein Flussdiagramm, welches die Datenverarbeitung im Rahmen eines Ausführungsbeispiels des erfindungsgemäßen Verfahrens zum Überwachen darstellt,
- FIG 5: einen Graph, auf welchem zwei Reihen von Prozesswerten über einen Erfassungszeitraum dargestellt sind.
- FIG 6: ein Flussdiagramm, welches darstellt, wie die Merkmalswerte nach einer bevorzugten Ausführungsform ermittelt werden,
- FIG 7: einen Graphen, der beispielhaft einige Merkmalswerte im nicht standardisierten Zustand zeigt,
- FIG 8: einen Graphen, in welchem die Merkmalswerte aus Figur 7 in standardisiertem Zustand gezeigt sind,
- FIG 9: einen Graph, der die Entscheidungsfunktion des Klassifikators über zwei reduzierte Merkmalswerte darstellt,
- FIG 10: ein Flussdiagramm, welches die Datenverarbeitung bei einem Verfahren zum Anlernen darstellt, und
- FIG 11: eine rein schematische Darstellung eines Ausführungsbeispiels einer erfindungsgemäßen Anordnung.

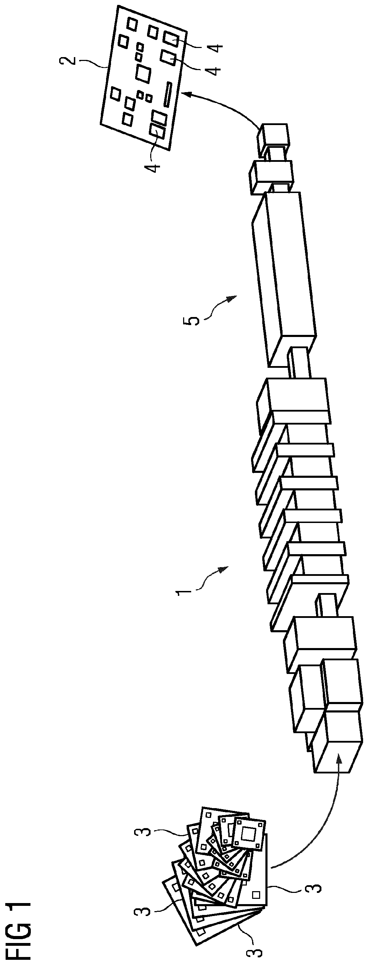

Die FIG 1 zeigt eine Seitenansicht einer Fertigungsanlage 1, die im Rahmen des vorliegend beschriebenen Ausführungsbeispiels der Herstellung von bestückten Leiterplatten 2 dient.

Der Anlage 1 werden im Betrieb in an sich bekannter Weise unbestückte Leiterplatten 3 zugeführt und Leiterplatten 2 im mit Bauteilen 4 bestückten Zustand als fertige Produkte erhalten.

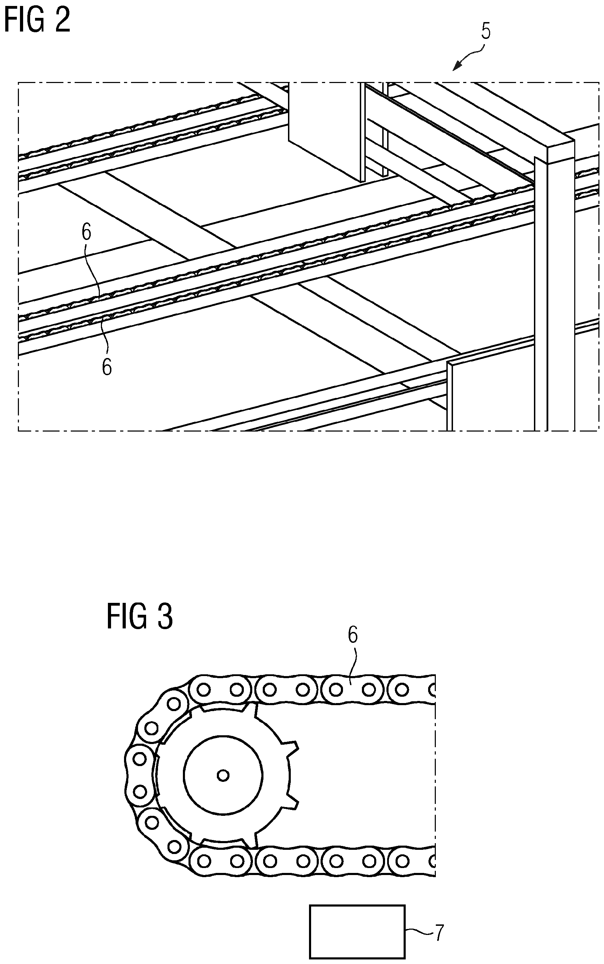

Die Anlage 1 umfasst einen Reflow-Ofen 5, der dem Reflow-Löten der Leiterplatten 2 dient. Beim Reflow-Löten wird in ebenfalls hinlänglich vorbekannter Weise Weichlot in Form von Lötpaste auf die Leiterplatten 3 aufgetragen bevor diese mit Bauteilen 4 bestückt werden. Die bestückten Leiterplatten 3 werden anschließend in dem Reflow-Ofen 5 erhitzt, wobei die Lötpaste schmilzt. Die Leiterplatten 3 werden dabei mittels einer oder mehrerer Transportketten 6 durch den Reflow-Ofen 5 transportiert. Ein Endbereich einer solchen Transportkette 6 kann der Figur 3 in vergrößerter, rein schematischer Darstellung entnommen werden. Die Transportkette 6 wird bzw. die Transportketten 6 werden ihrerseits von einem zugeordneten Motor 7 angetrieben, der in der Figur 3 rein schematisch durch ein Blockelement angedeutet ist. Es sei angemerkt, dass für den Fall, dass mehrere Transportketten 6 vorhanden sind, diese von einem gemeinsamen Motor 7 angetrieben werden können. Bei dem gezeigten Beispiel ist dies der Fall.

Die Transportketten 6 verschmutzen im Betrieb. Beim erneuten Start des Reflow-Ofens 5 im Anschluss an eine Stillstandszeit können daher Probleme, insbesondere aufgrund einer Schwergängigkeit der Transportketten 6 auftreten und die Anlaufzeiten des Ofens 5 kann sich verlängern. Schließlich werden die Transportketten 6 so schwergängig, dass ein Start des Ofens 5 nicht mehr möglich ist und die Transportkette ausgetauscht werden muss, wodurch es zu einem längeren Stillstand des Reflow-Ofens 5 und somit der gesamten Anlage 1 kommt. Für den Fall, dass mehrere Transportketten 6 vorhanden sind, die von einem gemeinsamen Motor 7 angetrieben werden, gilt dabei, dass eine endgültige Verschmutzung einer der Ketten 6 schon zu einem Ausfall führen kann.

Unter Durchführung des im folgenden beschriebenen Ausführungsbeispiels des erfindungsgemäßen Verfahrens zur Überwachung des Zustandes wenigstens einer im Betrieb bevorzugt bewegten Komponente, insbesondere Transportkette 6 einer Fertigungsanlage, kann eine Verschmutzung der Ketten 6 des Reflow-Ofens 5 frühzeitig zuverlässig erkannt werden. Dadurch können die Transportketten 6 rechtzeitig, bevorzugt im Rahmen einer ohnehin geplanten Wartung ausgetauscht werden, sodass das Aufkommen längerer Anlaufzeiten und/oder nicht geplanter Anlagenstillstandszeiten reduziert bzw. vermieden werden kann.

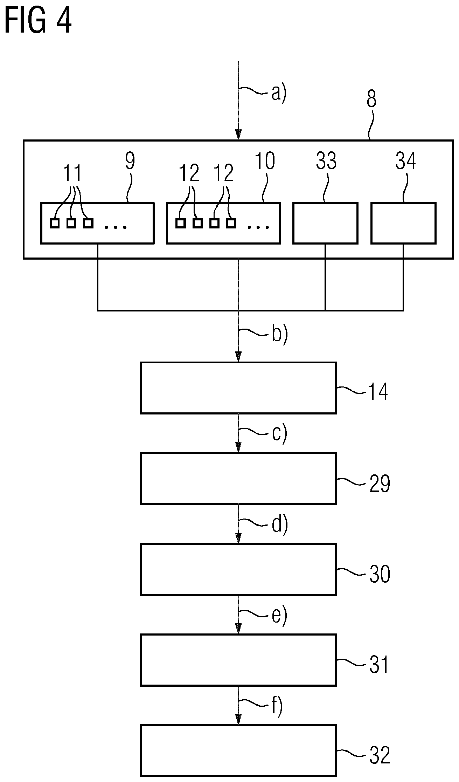

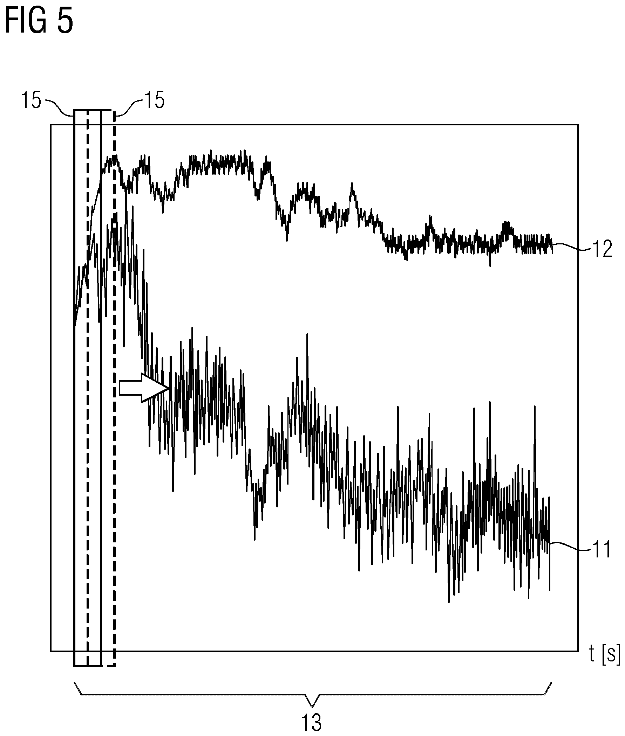

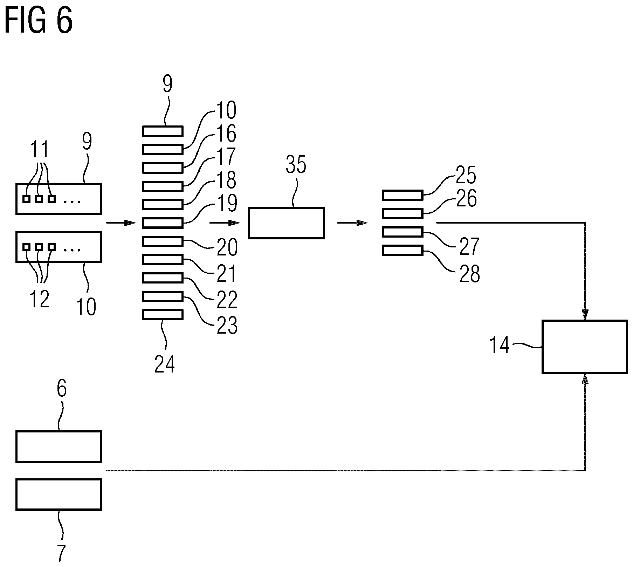

Das Verfahren umfasst die Schritte:
a) Ein Überwachungsdatensatz 8 wird empfangen, der eine oder mehrere Reihen 9, 10 von der wenigstens einen, vorliegend den mehreren Transportketten 6 zugeordneten Prozesswerten 11, 12 umfasst, wobei die Prozesswerte 11, 12 der oder der jeweiligen Reihe 9, 10 in einem Erfassungszeitraum 13 (vgl. Figur 5) an zeitlich beabstandeten Zeitpunkten in der Fertigungsanlage 1 erfasst wurden und/oder von in einem Erfassungszeitraum 13 an zeitlich beabstandeten Zeitpunkten in der Fertigungsanlage 1 erfassten Messwerten abgeleitet sind. Der hier gezeigte Erfassungszeitraum 13 bezieht sich auf die ersten 15 Minuten des Anlaufs der Transportketten 6, nach einem vorherigen Stillstand dieser. Es sei betont, dass dieser Zeitraum beispielhaft zu verstehen ist und auch andere Zeiträume als Erfassungszeitraum betrachtet werden können, beispielsweise auch kürzere Zeiträume, etwa die ersten 10 Minuten nach Anlauf der Transportkette(n) 6. Die Prozesswerte 11, 12 aus der Anlaufzeit können aus einem Gesamtdatensatz, welcher Prozesswerte 11 , 12 für einen vollständigen Betriebs- bzw. Bewegungszyklus umfassen kann, ausgeschnitten bzw. extrahiert sein. Da nur auf die Anlaufphase abgestellt wird, werden nur Zeitpunkte betrachtet, bei denen erfahrungsgemäß auch tatsächlich Probleme auftreten. Bei Stillstand des Ofens 5, sowie wenn der Ofen 5 aufgewärmt und eingelaufen ist, die Schwerfälligkeit der Transportkette(n) 6 also überwunden wurde, sind keine verwertbaren Informationen in den Daten zu vermuten.
b) Auf Basis der Prozesswerte 11 , 12 der oder der jeweiligen Reihe 9, 10 werden Merkmalswerte 14 ermittelt (vgl. Figur 4), indem für die oder die jeweilige Reihe 9, 10 mehrere innerhalb des Erfassungszeitraumes 13 liegende Zeitfenster 15 betrachtet werden und für jedes Zeitfenster 15 für die darin liegenden Prozesswerte 11, 12 und/oder für darin liegende von den Prozesswerten 11, 12 abgeleitete Werte 16-24 statistische Größen 25-28 ermittelt werden (vgl. Figur 6). Dabei können von den Prozesswerten 11, 12 abgeleitete Werte 16-24 auch mittels der Prozesswerte 11, 12 mehrerer Reihen 9, 10 ermittelt werden.
c) Die Merkmalswerte 14 werden standardisiert und/oder normalisiert, wodurch standardisierte und/oder normalisierte Merkmalswerte 29 erhalten werden.
d) Auf die standardisierten und/oder normierten Merkmalswerte 29 wird wenigstens eine mathematische Methode zur Dimensionsreduktion, vorliegend eine Hauptkomponentenanalyse angewendet, wodurch reduzierte Merkmalswerte 30 erhalten werden.
e) Die reduzierten Merkmalswerte 30 werden einem angelernten Maschinen-Lern-Modell, bei dem beschriebenen Beispiel einem angelernten Klassifikator 31, der durch eine Support Vector Machine mit Radialbasisfunktion als Kernel gegeben ist, als Eingangswerte zugeführt (zu Support Vector Machines siehe beispielsweise den Aufsatz "Support-Vector Networks" von C. Cortes und V. Vapnik, Machine Learning, Volume 20, Issue 3, Seiten 273-297 (1995).
f) Der angelernte Klassifikator 31 gibt eine Zustandsinformation 32 für die Transportketten 6 als Ausgangswert heraus.

Die Schritte können auch dem in Figur 4 dargestellten Flussdiagramm entnommen werden.

In Schritt a) wird vorliegend ein Überwachungsdatensatz 8 empfangen, der zwei Reihen 9, 10 von den vorliegend mehreren Transportketten 6 zugeordneten Prozesswerten 11, 12 aufweist, nämlich eine erste Reihe 9 mit dem Motorstrom 11 des die Transportketten 6 antreibenden Motors 7 und eine zweite Reihe 10 mit der Motordrehzahl 12, des die Transportketten 6 antreibenden Motors 7. Der Motorstrom 11 und die Motordrehzahl 12 stellen, da mit dem Motor 7 vorliegend jede der mehreren Ketten 6 angetrieben wird, Prozesswerte dar, die jeder der Ketten 6 zugeordnet sind.

Der empfangene Überwachungsdatensatz 8 umfasst vorliegend zusätzlich zu den beiden Reihen 9, 10 mit Motorstrom 11 und Motordrehzahl 12 die Dauer des letzten Ofenbetriebs 33 und die Dauer der letzten Pause 34 zwischen dem letzten Ofenbetrieb und dem Beginn des Erfassungszeitraums 13.

Die FIG 5 und 6 stellen dar, wie die Verarbeitung der zwei Reihen 9, 10 von den Transportketten 6 zugeordneten Prozesswerten, nämlich dem Motorstrom 11 und Motordrehzahl 12, des (jeweiligen) Überwachungsdatensatzes 8 ausgeführt wird.

Zur Ermittlung der Merkmalswerte 14 werden mehrere innerhalb des Erfassungszeitraums 13 liegende Zeitfenster 15 betrachtet (vgl. Figur 5). Vorliegend werden insgesamt 68 Zeitfenster in dem 15-minütigen Erfassungszeitraum 13 betrachtet. In der Figur 5 sind nur zwei der Fenster 15 beispielhaft dargestellt, das früheste Fenster 15 mit durchgezogener Linie und das nächste Fenster 15 mit gestrichelter. Man kann auch von einem Rolling-Window-Verfahren sprechen. In Figur 5 ist das "Rollen" durch einen von den Fenstern 15 nach rechts weisenden Pfeil angedeutet. Die Zeitfenster 15 weisen bei dem hier beschriebenen Beispiel die gleiche Zeitdauer von jeweils 60 Sekunden auf und die Zeitdauer eines Zeitfensters 15 ist vorliegend größer als der zeitliche Abstand zwischen dem Beginn jeweils zweier benachbarter Zeitfenster 15, so dass sich die Zeitfenster 15 überlappen. Der Abstand zwischen dem Beginn zweier benachbarter Fenster 15 beträgt vorliegend 10 Sekunden. Dieser Werte ist, genau wie derjenige der Fensterdauer, mit anderen Worten "Breite" der Fenster 15 rein beispielhaft und nicht einschränkend zu verstehen.

Wie in Figur 6 schematisch dargestellt, werden aus den zwei Reihen 9, 10 von Prozesswerten, dem Motorstrom 11 und der Motordrehzahl 12, weitere Werte abgeleitet. Vorliegend werden zehn weitere Werte von den beiden Prozesswerten 11, 12 abgeleitet, nämlich: Ableitung der Drehzahl, Ableitung des Stroms, (über 5 Sekunden) gemittelte Ableitung des Stroms, über 5 Sekunden) gemittelte Ableitung der Drehzahl, der Absolutbetrag der Drehzahl, der Absolutbetrag des Motorstroms, das Verhältnis von Motostrom 11 zu Drehzahl 12, das Verhältnis von Drehzahl 12 zu Motorstrom 11, das Quadrat vom Motorstrom 11 und das Quadrat der Drehzahl.

Die abgeleiteten Werte werden jeweils für zu den mehreren Zeitpunkten gehörigen Prozesswerte 11, 12 ermittelt. Im Ergebnis liegen neben den beiden Reihen 9, 10 mit den Prozesswerten Motorstrom 11 und Drehzahl 12 noch zehn weitere Reihen 16-24 mit den vorgenannten, von Motorstrom 11 und/oder Drehzahl 12 abgeleiteten Werten vor. Die Reihen 16-24 mit den abgeleiteten Werten umfassen dabei jeweils die gleiche Anzahl von Werten wie die ursprünglichen beiden Reihen 9, 10 mit den Prozesswerten 11, 12. Die Anzahl der Werte in der jeweiligen Reihe 9, 10, 16-24 kann auch als die Dimension bezeichnet werden.

Für alle zwölf Reihen 9, 10, 16-24, also sowohl für die Reihen 9, 10 mit Motorstrom 11 und Drehzahl 12 als auch für die zehn Reihen 16-24 mit den davon abgeleiteten Werten, werden bei dem dargestellten Beispiel jeweils 85 in dem Erfassungszeitraum 13 liegende Fenster 15, also insgesamt 12*85, also 1020 Fenster 15 betrachtet. Die sich ergebenden 12*85 Fenster 15 sind in der Figur 6 aus Gründen der vereinfachten Darstellung durch ein Blockelement angedeutet, welches mit der Bezugsziffer 35 versehen ist. Für jede der zwölf Reihen 9, 10, 16-24 und für jedes betrachtete Fenster 15, also für alle 12*85 Fenster 15 werden vorliegend jeweils mehrere statistische Größen 25-28 als die Merkmalswerte 14 ermittelt. Bei dem hier beschriebenen Beispiel wird für jedes der 12*85 Fenster 15 der maximale Wert 25 der in dem jeweiligen Fenster 15 liegenden Werte, der minimale Wert 26 der in dem jeweiligen Fenster 15 liegenden Werte, der Mittelwert 27 der in dem jeweiligen Fenster 15 liegenden Werte, und die Varianz 28 der in dem jeweiligen Fenster 15 liegenden Werte berechnet, also für jedes Fenster 15 vier statistische Größen 25-28. Im Ergebnis werden vorliegend 12*85*4, also 4080 statistische Größen erhalten, welche die Merkmalswerte 14 sind.

Zu diesen statistischen Größen bzw. Merkmalswerten 14 werden nun die Dauer des letzten Ofenbetriebs 33 und die Dauer der letzten Pause 34 als weitere Merkmalswerte hinzugeführt, so dass insgesamt (12*85*4)+2, also 4082 Merkmalswerte 14 erhalten werden, die in Figur 6 wiederum vereinfacht als einzelnes Blockelement dargestellt sind.

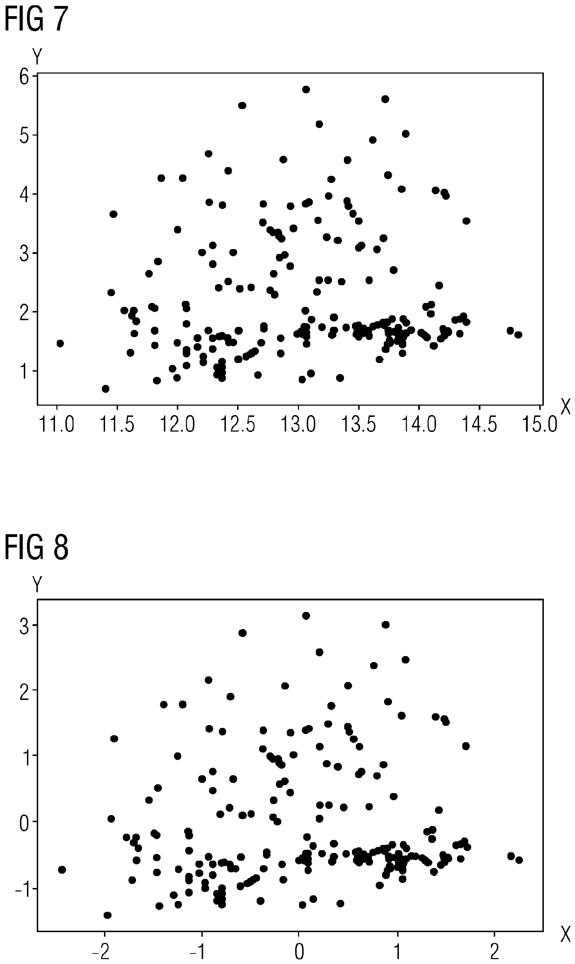

Die erhaltenen Merkmalswerte 14 werden im Rahmen des hier beschriebenen Ausführungsbeispiel in Schritt c) standardisiert. Hierfür wird der Mittelwert der Merkmalswerte 14 berechnet und dieser jeweils von den Merkmalswerten 14 abgezogen. Die Daten bzw. Werte befinden sich dann in jeder Dimension um den Nullpunkt herum. Anschließend wird die Standardabweichung auf eins gesetzt. Die Figur 7 zeigt beispielhaft einige Merkmalswerte 14 im unstandardisierten Zustand und die Figur 8 die Werte nach dem Standardisieren. Während in Figur 7 die Mittelwerte etwa 13 (X-Achse) bzw. 2,33 (Y-Achse) und die Standardabweichungen nicht gleich sind sondern 0,8 bzw. 1,11 betragen, sind die Mittelwerte beider Achsen in Figur 8 null und die Standardabweichung ist in beiden Achsen eins. Es sei angemerkt, dass die Maxima/Minima/Mittelwerte/Varianzen zwar jeweils nur Zahlenwerte sind, da die historischen Daten jedoch aus mehreren Messreihen bestehen, ergibt sich daraus eine Menge von Werten. Diese werden dann wie beschrieben standardisiert.

Die Daten sind dann optimal für die Dimensionsreduzierung durch eine Hauptkomponentenanalyse vorbereitet.

Weiterhin sei angemerkt, dass für die Standardisierung in Schritt c) bevorzugt eine Standardisierungsfunktion mitsamt ihren Parametern verwendet wird, die im Rahmen des Anlernens des Klassifikators 31 erhalten und gespeichert wurde. Mit anderen Worten werden, statt die Parameter der Standardisierung auf die Daten des Überwachungsdatensatzes 8 anzupassen, bevorzugt angepasste Funktionen verwendet, die beim Anlernen des Klassifikators 31, auf das weiter unten noch näher eingegangen wird, erhalten wurden.

Im Rahmen der anschließenden, in Schritt d) erfolgenden Hauptkomponentenanalyse zur Dimensionsreduktion werden Linearkombinationen aus den vorhandenen Merkmalen gebildet. Es werden im Folgenden nur solche Linearkombinationen (Hauptkomponenten) verwendet, die eine große Varianz aufweisen und demnach als entscheidungsrelevant angesehen werden können. Die Dimensionsreduktion entsteht dadurch, dass nur die wichtigsten Linearkombinationen verwendet werden.

Auch bezüglich der in Schritt d) durchgeführten Hauptkomponentenanalyse gilt bevorzugt, dass Parameter verwendet werden, die im Rahmen des Anlernens des Klassifikators 31 erhalten wurden, insbesondere Faktoren der Linearkombinationen, die beim Anlernen ermittelt wurden. Mit anderen Worten werden, statt die Parameter Hauptkomponentenanalyse auf die Daten des Überwachungsdatensatzes 8 anzupassen, bevorzugt angepasste Funktionen verwendet, die beim Anlernen des Klassifikators 31 erhalten wurden.

Durch die Hauptkomponentenanalyse werden reduzierte Merkmalswerte 30 erhalten, die im nächsten Schritt e) der angelernten Support Vector Machine 31 mit Radialbasisfunktion zugeführt werden, woraufhin diese in Schritt f) eine zugehörige Zustandsinformation für die überwachten Transportketten 6 herausgibt.

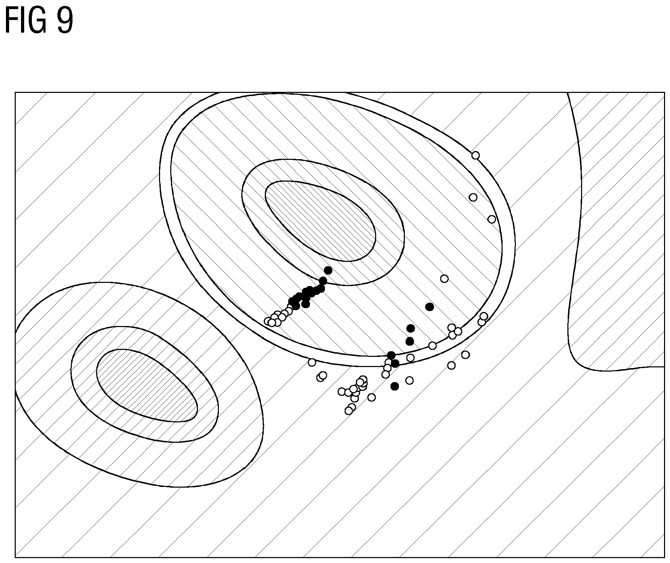

In der FIG 9 ist ein Graph dargestellt, bei dem die X-Achse beispielhaft eine erste und der Y-Achse eine zweite der Hauptkomponenten entspricht. In der beispielhaften, rein schematischen Figur 9 sind die Achsen unskaliert. In dem Graph sind die jeweils zu diesen gehörigen Zustandsinformationen enthalten. Dabei sind Bereiche mit Schlechtzuständen mit einer Schraffur von links nach rechts dargestellt und Bereiche mit Gutzuständen durch eine Schraffur von rechts nach links. Es sei angemerkt, dass es bei dem hier beschriebenen Beispiel nur zwei Zustände ("gut" und "schlecht") gibt. Die in der Figur verwendete mehr bzw. weniger enge Schraffur dient dazu, den Verlauf der Entscheidungsgrenze und die Form der Entscheidungsbereiche anschaulicher darzustellen.

In dem Graphen sind ferner beispielhaft einige reduzierte Merkmalswerte in Form von Punkten dargestellt, deren Lage jeweils den zwei Hauptkomponenten gemäß der X- und Y-Achse entspricht. Diejenigen Punkte, zu denen ein guter Zustand gehört, sind dabei ohne Füllung und diejenigen Punkte, zu denen ein schlechter Zustand gehört, mit Füllung dargestellt. Es sei angemerkt, dass auch, wenn der Graph graduelle zwischen gut und schlecht liegende Werte umfasst, die in Reaktion auf einen als Input erhaltenen Überwachungsdatensatz 8 als Output ausgegebene Zustandsinformation bei dem hier beschriebenen Beispiel immer gut oder schlecht ist. Für Punkte, die in einem Bereich mit von rechts nach links gehender Schraffur liegen, egal wie eng diese ist, gilt entsprechend, dass sie ohne Füllung für "gut" dargestellt sind und Punkte in Bereich mit von links nach rechts gehender Schraffur sind entsprechend gefüllte Punkte für "schlecht". Bei einigen Punkten gilt dies in Figur 9 nicht. Hier ist zu berücksichtigen, dass aus Gründen der Darstellung nur beispielhaft zwei der Hauptkomponenten gezeigt sind. Für einen Punkt mit Füllung in einem von rechts nach links schraffierten Bereich muss gelten, dass dieser bezüglich wenigstens einer weiteren Hauptkomponente in einem schlechten Bereich liegt. Es sei angemerkt, dass bei dem dargestellten Beispiel zehn Hauptkomponenten verwendet worden sind und sich nur der Wert einer Hauptkomponente im Schlecht-Bereich befinden muss, um den Zustand als "schlecht" zu bezeichnen. Weiterhin zeigt die FIG 9 beispielhaft Punkte für zwei verschiedene Öfen 5, wobei die oben links nahezu auf einer Linie liegenden Punkte zu einem Ofen 5 gehören und die verbleibenden Punkte zu einem weiteren.

Vorliegend bedeutet die Zustandsinformation "schlecht", dass die überwachten Transportketten 6 in relativ naher Zukunft ausgetauscht werden muss, konkret in weniger als einem Monat. "Gut" hingegen bedeutet, dass ein Austausch erst zu einem späteren Zeitpunkt erforderlich sein wird.

Der angelernte Klassifikator, dem in Schritt e) die reduzierten Merkmalswerte zugeführt werden, ist zuvor dazu angelernt worden, für empfangene reduzierte Merkmalswerte 30 zugehörige Zustandsinformationen ausgeben zu können. Der Graph in Figur 9 mit den darin enthaltenen Schraffuren, stellt sozusagen das Ergebnis des Anlernens bzw., da Zustandsinformationen beispielhaft nur für zwei der Hauptkomponenten dargestellt sind, einen Teil davon visuell und schematisch dar. Das Anlerne erfolgt bzw. erfolgte bevorzugt unter Durchführung eines Ausführungsbeispiels des erfindungsgemäßen Verfahrens zum Anlernen, das im Folgenden beschrieben wird. Es sei angemerkt, dass diese Schritte vor dem Schritt a) des vorstehend beschriebenen Verfahrens zum Überwachen durchgeführt werden und somit auch einen Teil des Verfahrens zur Überwachung bilden können, jedoch nicht müssen.

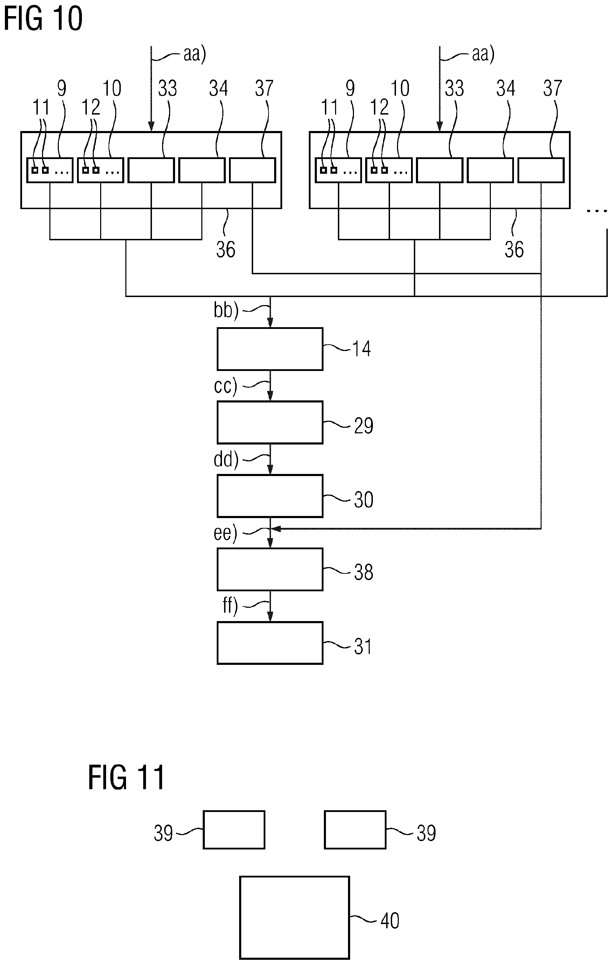

FIG 10 zeigt ein Flussdiagramm mit den Schritten des Beispiels des Verfahrens zum Anlernen des Klassifikators 31.

Es sei vorweggenommen, dass die für das Anlernen erfolgenden Schritte in großem Umfang mit den vorstehend für die Überwachung beschriebenen Schritte übereinstimmen. Unterschiedlich ist nur, dass mehrere Anlerndatensätze anstelle eines Überwachungsdatensatzes erforderlich sind und die Anlerndatensätze jeweils neben den Daten des Überwachungsdatensatzes eine zugehörige Zustandsinformation umfassen müssen, um den Klassifikator 31 zu trainieren, diese später als Output herauszugeben.

Das Verfahren zum Anlernen des Klassifikators 31, der für die Überwachung des Zustandes wenigstens einer in Betrieb bewegten Komponente, insbesondere wenigstens einer Transportkette 6, in einer Fertigungsanlage 1 verwendet werden kann, umfasst entsprechend die Schritte:
aa) Mehrere Anlerndatensätze 36 werden empfangen, wobei jeder Anlerndatensatz 36 eine oder mehrere Reihen 9, 10 von wenigstens einer im Betrieb bevorzugt bewegten Komponente, vorliegend wenigstens einer Transportkette 6 zugeordneten Prozesswerten 11, 12 umfasst, wobei die Prozesswerte 11, 12 der oder der jeweiligen Reihe 9, 10 in einem Erfassungszeitraum 13 an zeitlich beabstandeten Zeitpunkten in einer die wenigstens eine Komponente, vorliegend wenigstens eine Transportkette 6 umfassenden Fertigungsanlage 1 erfasst wurden und/oder von in einem Erfassungszeitraum 13 an zeitlich beabstandeten Zeitpunkten in einer die wenigstens eine Komponente, vorliegend Transportkette 6 umfassenden Fertigungsanlage 1 erfassten Messwerten abgeleitet sind, und wobei jeder Anlerndatensatz 36 eine der oder den Reihen 9, 10 des jeweiligen Anlerndatensatzes 33 zugeordnete Zustandsinformation 37 über die im Betrieb bevorzugt bewegte Komponente, vorliegend Transportkette 6 umfasst.
   Die Anlerndatensätze 36 umfassen vorliegend jeweils ebenfalls eine erste Reihe 9 mit dem Motorstrom 11 des mehrere Transportketten 6 eines Ofens 5 antreibenden Motors 7 und eine zweite Reihe 10 mit der Motordrehzahl 12 des mehrere Transportketten 6 eines Ofens 5 antreibenden Motors 7.
   Der Erfassungszeitraum 13 jedes Anlerndatensatzes 36 bezieht sich auf die ersten 15 Minuten des Anlaufs des Ofens 5 bzw. der Transportketten 6, nach einem vorherigen Stillstand dieser. Die Prozesswerte 11, 12 aus der Anlaufzeit können jeweils aus einem Gesamtdatensatz, welcher Prozesswerte 11, 12 für einen vollständigen Betriebs- bzw. Bewegungszyklus umfassen kann, ausgeschnitten bzw. extrahiert sein. Da nur auf die jeweilige Anlaufphase abgestellt wird, werden nur Zeitpunkte betrachtet, bei denen erfahrungsgemäß auch tatsächlich Probleme auftreten. Bei Stillstand des Ofens 5, sowie wenn der Ofen 5 aufgewärmt und eingelaufen ist, die Schwerfälligkeit der Transportketten 6 also überwunden wurde, sind keine verwertbaren Informationen in den Daten zu vermuten.
   Bei dem beschriebenen Beispiel wurden die Prozesswerte der Anlerndatensätze 36 in der gleichen, in Figur 1 schematisch dargestellten Anlage 1 erfasst, konkret für Transportketten 6, welche zu die zu überwachenden Transportketten 6 bzw. den zu überwachenden Transportketten 6 baugleich waren und vor dieser bzw. diesen in der Anlage 1 verwendet wurden.
   Die Zustandsinformationen 37 der Anlerndatensätze 36 wurden dabei anhand der Länge der Zeitspanne zwischen dem Ende des Erfassungszeitraums 13 des jeweiligen Anlerndatensatzes 36 und dem darauffolgenden Auftreten eines nicht ordnungsgemäßen Zustands und/oder erforderlichen Austauschs der Transportketten 6 ermittelt werden bzw. worden sein. Es wurde anhand der Betrachtung historischer Daten, für welche bekannt war, wann im Anschluss an die Erfassung der Prozesswerte 11, 12 jeweils ein Austausch erforderlich war, ein guter bzw. schlechter Zustand zugeordnet.
   Der jeweilige Anlerndatensatz 36 umfasst vorliegend zusätzlich zu den beiden Reihen 9, 10 mit Motorstrom 11 und Motordrehzahl 12 die Dauer des letzten Ofenbetriebs 33 vor dem jeweiligen Erfassungszeitraum 13 und die Dauer der letzten Pause 34 zwischen dem letzten Ofenbetrieb und dem Beginn des jeweiligen Erfassungszeitraums 13.
bb) Für jeden Anlerndatensatz 36 werden auf Basis der Prozesswerte 11, 12 der Reihen 9, 10 Merkmalswerte 14 ermittelt, wobei für jede Reihe 9, 10 mehrere innerhalb des jeweiligen Erfassungszeitraumes 13 liegende Zeitfenster 15 betrachtet werden und für jedes Zeitfenster 15 für die darin liegenden Prozesswerte 11, 12 und/oder für darin liegende von den Prozesswerten 11, 12 abgeleiteten Werte statistische Größen als Merkmalswerte 14 ermittelt werden. Von den Prozesswerten 11, 12 abgeleitete Werte können dabei auch mittels der Prozesswerte 11, 12 mehrerer Reihen 9, 10 ermittelt werden.
cc) Die Merkmalswerte 14 werden anschließend standardisiert.
dd) Auf die Merkmalswerte 14 wird wenigstens eine mathematische Methode zur Dimensionsreduktion angewendet wird, um reduzierte Merkmalswerte 30 erhalten, vorliegend eine Hauptkomponentenanalyse.
   Bei den Schritten bb), cc) und dd) wird dabei für jeden der Anlerndatensätze 36 im Wesentlichen so vorgegangen, wie vorstehend für den Überwachungsdatensatz beschrieben. Die jeweilige Zustandsinformation 37 wird dabei zunächst außer Acht gelassen.
   Zusätzlich wird dabei die in Schritt cc) verwendete Standardisierungsfunktion mitsamt ihren Parametern abgespeichert, so dass diese anschließend (jeweils) in Schritt c) des Überwachungsverfahrens für die Standardisierung im Zusammenhang mit Überwachungsdatensatz verwendet werden kann.
   Weiterhin zusätzlich werden die Parameter der in Schritt dd) durchgeführten Methode zur Dimensionsreduktion, vorliegend die Parameter der Hauptkomponentenanalyse abgespeichert, so dass diese anschließend (jeweils) in Schritt d) des Überwachungsverfahrens für die Hauptkomponentenanalyse im Zusammenhang mit Überwachungsdatensatz 8 verwendet werden kann.
ee) Die reduzierten Merkmalswerte 30 der Anlerndatensätze 36 werden anschließend zusammen mit den diesen jeweils zugeordneten Zustandsinformationen 36 für die jeweiligen Transportketten 6 dem sich im ungelernten Zustand befindlichen Maschinen-Lern-Modell, vorliegend Klassifikator 38, zugeführt.
ff) Der Klassifikator 38 wird anhand der reduzierten Merkmalswerte 30 und den zugeordneten Zustandsinformationen 37 angelernt, wodurch ein angelernten Klassifikator 31 erhalten wird. Der angelernte Klassifikator 31 wird gespeichert, damit dieser anschließend (jeweils) in Schritt e) des Überwachungsverfahrens verwendet werden kann.

Die Schritte des vorstehend beschriebenen Ausführungsbeispiels des Verfahrens zum Überwachen des Zustandes wenigstens einer im Betrieb bevorzugt bewegten Komponente, insbesondere wenigstens einer Transportkette 6, in einer Fertigungsanlage 1 können mittels eines Computerprogrammes durchgeführt werden, das Programmcode-Mittel umfasst, die bei der Ausführung des Programms auf wenigstens einem Computer den wenigstens einen Computer veranlassen, die Schritte durchzuführen. Das gleiche gilt für das beschriebenen Ausführungsbeispiel des erfindungsgemäßen Verfahrens zum Anlernen. Es kann auch ein Computerprogramm zum Einsatz kommen, welches Programmcode-Mittel umfasst, die bei der Ausführung des Programms auf wenigstens einem Computer den wenigstens einen Computer veranlassen, die Schritte des Verfahrens zum Anlernen und anschließend die Schritte des Verfahrens zur Überwachung durchzuführen.

Eine Anordnung zur Durchführung des vorstehend beschriebenen Ausführungsbeispiels eines erfindungsgemäßen Verfahrens zum Überwachen ist rein schematisch in der Figur 11 dargestellt. Sie umfasst bevorzugt einen oder mehrere Sensoren 39, mittels dem bzw. mittels derer im Betrieb die Prozesswerte 11, 12, vorliegend der Motorstrom 11 und die Drehzahl 12 und/oder Messwerte, von denen diese Prozesswerte abgeleitet werden können, erfasst werden können, und eine Recheneinrichtung, vorliegend ein Industrie-PC 40, der zur Durchführung der vorstehend beschriebenen Schritte a) bis f) ausgebildet und/oder eingerichtet ist. Bevorzugt ist auf der Industrie-PC ein entsprechendes Computerprogramm abgelegt. Die Sensoren 40 sind an geeigneter Position in der Anlage 1 angeordnet und kabelgebunden oder kabellos mit dem Industrie-PC 40 verbunden, so dass die Prozesswerte 11, 12 bzw. Messwerte, von welchen diese ableitbar sind, an den Industrie-PC 40 übertragen werden können.

Die Anordnung ist vorliegend Bestandteil der in Figur 1 dargestellten Anlage 1, die ein Ausführungsbeispiel einer erfindungsgemäßen Fertigungsanlage darstellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Überwachen des Zustandes wenigstens einer im Betrieb bevorzugt bewegten Komponente, insbesondere wenigstens einer Transportkette (6), in einer Fertigungsanlage (1), bei dem
a) ein Überwachungsdatensatz (8) empfangen wird, der eine oder mehrere Reihen (9, 10) von der wenigstens einen Komponente (6) zugeordneten Prozesswerten (11, 12) umfasst, wobei die Prozesswerte (11, 12) der oder der jeweiligen Reihe (9, 10) in einem Erfassungszeitraum (13) an zeitlich beabstandeten Zeitpunkten in der Fertigungsanlage (1) erfasst wurden und/oder von in einem Erfassungszeitraum (13) an zeitlich beabstandeten Zeitpunkten in der Fertigungsanlage (1) erfassten Messwerten abgeleitet sind,
b) auf Basis der Prozesswerte (11, 12) der oder der jeweiligen Reihe (9, 11) Merkmalswerte (14) ermittelt werden, indem für die oder die jeweilige Reihe (9, 10) mehrere innerhalb des Erfassungszeitraumes (13) liegende Zeitfenster (15) betrachtet werden und für jedes Zeitfenster (15) für die darin liegenden Prozesswerte (11, 12) und/oder für darin liegende von den Prozesswerten (11, 12) abgeleitete Werte statistische Größen ermittelt werden, wobei von den Prozesswerten (11, 12) abgeleitete Werte auch mittels der Prozesswerte (11, 12) mehrerer Reihen (9, 10) ermittelt werden können,
c) die Merkmalswerte (14) standardisiert und/oder normalisiert werden,
d) auf die Merkmalswerte (14) wenigstens eine mathematische Methode zur Dimensionsreduktion angewendet wird, wodurch reduzierte Merkmalswerte (30) erhalten werden,
e) die reduzierten Merkmalswerte (30) einem angelernten Maschinen-Lern-Modell (31) als Eingangswerte zugeführt werden, und
f) das angelernte Maschinen-Lern-Modell (31) eine Zustandsinformation (37) für die wenigstens eine Komponente (6) als Ausgangswert herausgibt.

2. Verfahren nach Anspruch 1, **dadurch gekennzeichnet, dass** wenigstens ein Warnsignal und/oder wenigstens eine Warnnachricht ausgegeben wird, wenn in Schritt f) eine Zustandsinformation (37) herausgegeben wird, die einen nicht ordnungsgemäßen Zustand der wenigstens einen Komponente (6) indiziert.

3. Verfahren zum Anlernen eines Maschinen-Lern-Modells (31), das für die Überwachung des Zustandes wenigstens einer im Betrieb bevorzugt bewegten Komponente, insbesondere einer Transportkette (6), in einer Fertigungsanlage (1) verwendet werden kann, bei dem
aa) mehrere Anlerndatensätze (36) empfangen werden, wobei jeder Anlerndatensatz (36) eine oder mehrere Reihen (9, 10) von wenigstens einer Komponente (6) zugeordneten Prozesswerten (11, 12) umfasst, wobei die Prozesswerte der oder der jeweiligen Reihe (9, 10) in einem Erfassungszeitraum (13) an zeitlich beabstandeten Zeitpunkten in einer die wenigstens eine Komponente (6) umfassenden Fertigungsanlage (1) erfasst wurden und/oder von in einem Erfassungszeitraum (13) an zeitlich beabstandeten Zeitpunkten in einer die wenigstes eine Komponente (6) umfassenden Fertigungsanlage (1) erfassten Messwerten abgeleitet sind, und wobei jeder Anlerndatensatz (36) eine der oder den Reihen (9, 10) des jeweiligen Anlerndatensatzes (36) zugeordnete Zustandsinformation (37) über die wenigstens eine Komponente (6) umfasst,
bb) auf Basis der Prozesswerte (11, 12) der Reihen (9, 10) der Anlerndatensätze (36) Merkmalswerte (14) ermittelt werden, wobei für jede Reihe (9, 10) jedes Anlerndatensatzes (36) mehrere innerhalb des Erfassungszeitraumes (13) liegende Zeitfenster (15) betrachtet werden und für jedes Zeitfenster (15) für die darin liegenden Prozesswerte (11, 12) und/oder für darin liegende von den Prozesswerten (11, 12) abgeleiteten Werte statistische Größen als Merkmalswerte (14) ermittelt werden, wobei von den Prozesswerten)11, 12) abgeleitete Werte auch mittels der Prozesswerte (11, 12) mehrerer Reihen (9, 10) ermittelt werden können,
cc) die Merkmalswerte (14) standardisiert und/oder normalisiert werden,
dd) auf die Merkmalswerte (14) wenigstens eine mathematische Methode zur Dimensionsreduktion angewendet wird, um reduzierte Merkmalswerte (30) erhalten,
ee) die reduzierten Merkmalswerte (30) zusammen mit den diesen jeweils zugeordneten Zustandsinformationen (37) für die wenigstens eine Komponente, insbesondere die Transportkette (6), dem Maschinen-Lern-Modell (38) zugeführt werden, und
ff) das Maschinen-Lern-Modell (38) anhand der reduzierten Merkmalswerte (30) und den zugeordneten Zustandsinformationen (37) angelernt wird.

4. Verfahren nach Anspruch 3, **dadurch gekennzeichnet, dass** die Zustandsinformationen (37) anhand der Länge der Zeitspanne zwischen dem Ende des Erfassungszeitraums (13) und dem darauffolgenden Auftreten eines nicht ordnungsgemäßen Zustands und/oder erforderlichen Austauschs der wenigstens einen Komponente (6) ermittelt werden oder wurden.

5. Verfahren nach einem der Ansprüche 1 oder 2, **dadurch gekennzeichnet, dass** das Maschinen-Lern-Modell (31) unter Durchführung eines Verfahrens gemäß Anspruch 3 oder 4 angelernt worden ist oder vor Schritt e) unter Durchführung eines Verfahrens gemäß Anspruch 3 oder 4 angelernt wird.

6. Verfahren nach einem der Ansprüche 1 oder 2 oder Anspruch 5, **dadurch gekennzeichnet, dass** in Schritt c) eine Standardisierungsfunktion und/oder eine Normierungsfunktion und/oder Parameter verwendet werden, die im Rahmen des Anlernens des Maschinen-Lern-Modells, dem in Schritt e) die reduzierten Merkmalswerte zusammen mit den diesen jeweils zugeordneten Zustandsinformationen (37) zugeführt werden, ermittelt wurden,
und/oder
dass in Schritt d) im Rahmen der wenigstens einen mathematischen Methode zur Dimensionsreduktion Parameter verwendet werden, die im Rahmen des Anlernens des Maschinen-Lern-Modells (31), dem in Schritt e) die reduzierten Merkmalswerte (30) zusammen mit den diesen jeweils zugeordneten Zustandsinformationen (37) zugeführt werden, ermittelt wurden.

7. Verfahren nach einem der vorhergehenden Ansprüche, **dadurch gekennzeichnet, dass** die Anlerndatensätze (36) und/oder der Überwachungsdatensatz (8) jeweils wenigstens zwei Reihen (9, 10) von Prozesswerten (11, 12) umfassen, wobei bevorzugt die jeweils eine Reihe (9, 10) Werte der Drehzahl (12) eines die wenigstes eine Komponente (6) antreibenden Motors (7) als Prozesswerte umfasst und die jeweils andere Reihe (9, 10) Werte des Motorstroms (11) des die wenigstens eine Komponente (6) antreibenden Motors (7) als Prozesswerte umfasst,
und/oder
dass die Anlerndatensätze (36) und/oder der Überwachungsdatensatz (8) jeweils wenigstens zwei Reihen (9, 10) von Prozesswerten (11, 12) umfassen, und in Schritt b) bzw. bb) die Verhältnisse der Prozesswerte (11, 12) wenigstens zweier Reihen (9, 10) als von den Prozesswerten (11, 12) abgeleitete Werte berechnet werden.

8. Verfahren nach einem der vorherigen Ansprüche, **dadurch gekennzeichnet, dass** zumindest eine der Reihen (9, 10) von Prozesswerten (11, 12) durch einen an der Fertigungsanlage (1) angebrachten Sensor (39) gemessen wird oder wurde,
und/oder
dass das Maschinen-Lern-Modell durch einen Klassifikator (31) gegeben ist oder wenigstens einen solchen umfasst.

9. Verfahren nach einem der vorherigen Ansprüche, **dadurch gekennzeichnet, dass** der Erfassungszeitraum (13) des jeweiligen Anlerndatensatzes (36) und/oder des Überwachungsdatensatzes (8) einer Anlaufzeit der wenigstens einen Komponente (6) entspricht, wobei die Anlaufzeit insbesondere einen Zeitraum von 30 Minuten, bevorzugt einen Zeitraum von 15 Minuten nach der Bewegungsaufnahme der wenigstens einen Komponente (6) im Anschluss an einen Stillstand dieser umfasst,
und/oder
dass die innerhalb des Erfassungsraums (13) liegenden Zeitfenster (15) die gleiche Zeitdauer aufweisen und/oder die Zeitdauer eines Zeitfensters (15) größer ist als die Zeitdauer zwischen dem Beginn zweier benachbarter Zeitfenster (15), so dass sich die Zeitfenster (15) überlappen.

10. Verfahren nach einem der vorherigen Ansprüche, **dadurch gekennzeichnet, dass** die in Schritt b) bzw. bb) berechneten statistischen Größen das Maximum und/oder das Minimum und/oder der Mittelwert und/oder die Varianz von Prozesswerten (11, 12) und/oder von diesen abgeleiteten Werten umfassen, insbesondere das Maximum und/oder das Minimum und/oder den Mittelwert und/oder die Varianz der Prozesswerte (11, 12) und/oder der von diesen abgeleiteten Werten aus wenigstens einem Zeitfenster (15),
und/oder
dass der jeweilige Anlerndatensatz (36) und/oder der Überwachungsdatensatz (8) ebenfalls die Zeitdauer eines vorherigen Betriebs der wenigstens einen Komponente (6) und/oder die Zeitdauer einer Pause zwischen dem vorherigen Betrieb der wenigstens einen Komponente (6) und dem Beginn des Erfassungszeitraumes (13) umfassen und diese den in Schritt b) bzw. bb) ermittelten Merkmalswerten (14) als zusätzliche Merkmalswerte hinzugefügt werden.

11. Verfahren nach einem der vorherigen Ansprüche, **dadurch gekennzeichnet, dass** in Schritt d) bzw. dd) als mathematische Methode zur Dimensionsreduktion eine Hauptkomponentenanalyse bzw. eine eine Hauptkomponentenanalyse einschließende Methode durchgeführt wird,
und/oder
dass das Maschinen-Lern-Modell (31) eine Support Vector Machine oder ein künstliches neuronales Netz oder eine Nächste-Nachbarn-Klassifikation oder ein Entscheidungsbaum oder ein Random Forest Klassifikator umfasst oder als solche, beziehungsweise solches, ausgestaltet ist,
und/oder
dass die Fertigungsanlage (1) ein Reflow-Ofen (5) zum Löten von Leiterplatten mit einer Lötpaste ist und die wenigstens eine Komponente eine Transportkette (6) des Reflow-Ofens (5) ist, die dem Transport von Leiterplatten dient oder dass die Fertigungsanlage (1) einen Reflow-Ofen (5) zum Löten von Leiterplatten mit einer Lötpaste umfasst und die wenigstens eine Komponente eine Transportkette (6) des Reflow-Ofens (5) ist.

12. Anordnung zum Durchführen eines oben beschriebenen Verfahrens zum Überwachen des Zustandes wenigstens einer im Betrieb bevorzugt bewegten Komponente, insbesondere einer Transportkette (6), einer Fertigungsanlage (1), aufweisend
zumindest einen Sensor (39) zum Erfassen einer oder mehrerer Reihen (9, 10) von wenigstens einer im Betrieb bevorzugt bewegten Komponente, insbesondere einer Transportkette (6), zugeordneten Prozesswerten (11, 12), und
eine Rechenmaschine (40), die dazu ausgebildet und/oder eingerichtet ist,
einen Überwachungsdatensatz (8) zu empfangen, der eine oder mehrere Reihen (9, 10) von der wenigstens einen Komponente (6) zugeordneten Prozesswerten (11, 12) umfasst, wobei die Prozesswerte (11, 12) mittels des wenigstens einen Sensors (39) in einem Erfassungszeitraum (13) an zeitlich beabstandeten Zeitpunkten erfasst wurden und/oder von mittels des zumindest einen Sensors (39) in einem Erfassungszeitraum (13) an zeitlich beabstandeten Zeitpunkten erfassten Messwerten abgeleitet sind,
mehrere innerhalb des Erfassungszeitraumes (13) liegende Zeitfenster (15) zu identifizieren und für die in jedem Zeitfenster (15) liegenden Prozesswerte (11, 12) und/oder für von diesen abgeleitete Werte statistische Größen als Merkmalswerte (14) zu berechnen, wobei von den Prozesswerten (11, 12) abgeleitete Werte auch auf Basis der Prozesswerte (11, 12) mehrerer Reihen (9, 10) ermittelt werden können,
die Merkmalswerte (14) zu standardisieren und/oder zu normalisieren,
wenigstens eine mathematische Methode zur Dimensionsreduktion auf die Merkmalswerte (14) anzuwenden, um reduzierte Merkmalswerte (30)zu erhalten,
mittels eines angelernten Maschinen-Lern-Modells (31) anhand der reduzierten Merkmalswerte (30) eine diesen zugehörige Zustandsinformation (37) zu ermitteln,
wobei die Anordnung bevorzugt dazu ausgestaltet und/oder eingerichtet ist, wenigstens ein Warnsignal und/oder wenigstens eine Warnnachricht herauszugeben, wenn eine Zustandsinformation ermittelt wird, die einen nicht ordnungsgemäßen Zustand der wenigstens einen Komponente (6) indiziert.

13. Fertigungsanlage (1) umfassend ein Anordnung nach Anspruch 12.

14. Computerprogramm umfassend Programmcode-Mittel, die bei der Ausführung des Programms auf wenigstens einem Computer den wenigstens einen Computer veranlassen, die Schritte des Verfahrens nach einem der Ansprüche 1 bis 11 durchzuführen.

15. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.
